(19) Europäisches Patentamt
European Patent Office
Office européen des brevets

(11) EP 4 345 120 A1

# (12) EUROPÄISCHE PATENTANMELDUNG

(43) Veröffentlichungstag:
**03.04.2024 Patentblatt 2024/14**

(21) Anmeldenummer: **22198742.3**

(22) Anmeldetag: **29.09.2022**

(51) Internationale Patentklassifikation (IPC):
***C08G 77/08*** (2006.01) ***C08G 77/10*** (2006.01)
***B01J 21/10*** (2006.01) ***B01J 23/02*** (2006.01)
***B01J 23/04*** (2006.01)

(52) Gemeinsame Patentklassifikation (CPC):
**C08G 77/08; C08G 77/10**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Rudolf GmbH**
**82538 Geretsried (DE)**

(72) Erfinder:
- **WENNG, Andreas**
  **85540 Haar (DE)**
- **HOFER, Alexander**
  **83671 Benediktbeuern (DE)**
- **DUSCHEK, Gunther**
  **83671 Benediktbeuern (DE)**
- **SIELEMANN, Dirk**
  **82515 Wolftratshausen (DE)**

(74) Vertreter: **Weickmann & Weickmann PartmbB**
**Postfach 860 820**
**81635 München (DE)**

## (54) ANIONISCHE POLYMERISATION VON SILOXANEN

(57) Die Erfindung betrifft ein Katalysatorpellet zur anionischen Polymerisation von Organosiloxanen und/oder zur Äquilibrierung von Organopolysiloxanen, umfassend mindestens ein (Erd)alkalimetalloxid, dessen Herstellung, sowie ein Verfahren zur Polymerisation von Organosiloxanen und/oder zur Äquilibrierung von Organopolysiloxanen mittels des Katalysatorpellets.

EP 4 345 120 A1

## Beschreibung

Die Erfindung betrifft ein Katalysatorpellet zur anionischen Polymerisation von Organosiloxanen und/oder zur Äquilibrierung von Organopolysiloxanen, umfassend mindestens ein (Erd)alkalimetalloxid, dessen Herstellung, sowie ein Verfahren zur Polymerisation von Organosiloxanen und/oder zur Äquilibrierung von Organopolysiloxanen mittels des Katalysatorpellets.

EP 3 599 256 B1 offenbart die Polymerisation von Siloxanen mithilfe eines basischen Initiators, bevorzugt aus der Gruppe der Stickstoffbasen und einer hydroxyfunktionalisierten Verbindung wie Wasser, aus der Gruppe der linearen oder verzweigten Alkohole oder Silanole aus der Gruppe der Triorganosilanole in Gegenwart eines polar-aprotischen Lösungsmittels. Die so hergestellten Organopolysiloxane sind mit dem Lösungsmittel bei Raumtemperatur nicht mischbar. Eine Abtrennung des Lösungsmittels und eine gegebenenfalls notwendige Aufreinigung des hergestellten Polymers sind notwendig.

WO 2006/122704 offenbart die Polymerisation von Hexaorganocyclotrisiloxanen ($D_3$) mit Sil(ox)anolen in Gegenwart eines geträgerten Katalysators aus der Gruppe der (Erd)alkalimetallcarbonate und/oder (Erd)alkalimetaloxide im Lösungsmittel. Das Verfahren erfolgt im Batchbetrieb. Es werden dabei Diorganopolysiloxane generiert, die endständig eine Hydroxygruppe aufweisen. Die Reaktionsmischung muss filtriert und destilliert werden, um das Silikonöl zu erhalten. Ein Abbruch der Reaktion bei unvollständigem Umsatz kann durch Abkühlen auf Raumtemperatur, Filtration des verwendeten Feststoffkatalysators aus dem viskosen Endprodukt oder durch Zugabe einer Säure erfolgen. Bei Säurezugabe bilden sich Salzausfällungen, die weitere Filtrationsschritte erfordern.

EP 1 988 115 A1 offenbart ein Verfahren zur Herstellung von Aminoalkylgruppen aufweisende Organopolysiloxane durch Umsetzung von linearen, zyklischen oder verzweigten Organopolysiloxanen mit Aminoalkylsilanen in Gegenwart eines basischen Katalysators aus der Gruppe der Alkalimetallhydroxide, -alkoholate und -siloxanolate. Das Verfahren wird in einem kontinuierlichen Prozess durchgeführt. Die eingesetzten basischen Katalysatoren müssen in Anschluss an die Umsetzung deaktiviert werden, zum Beispiel durch Zugabe von Neutralisationsmitteln oder Inhibitoren. Gebildete Feststoffe werden meist durch kontinuierliche Filtrations- oder Extraktionsverfahren entfernt.

Die Verfahren des Standes der Technik haben den Nachteil, dass nachgeschaltete Deaktivierungsschritte und/oder aufwändige Filtrationsschritte durchgeführt werden müssen.

Der vorliegenden Erfindung liegt daher die Aufgabe zugrunde, einen verbesserten Katalysator zur anionischen Polymerisation von Organosiloxanen bereitzustellen und diesen Katalysator in einem verbesserten Verfahren zu nutzen.

Überraschend wurde gefunden, dass mittels erfindungsgemäßer Katalysatoren hydroxyfunktionelle Organopolysiloxane in hohen Ausbeuten bereitgestellt werden können. Es wird darüber hinaus beobachtet, dass das erhaltene Organopolysiloxan im Wesentlichen nicht zu höher molekularen Organopolysiloxanen kondensiert.

In einem Aspekt betrifft die vorliegende Erfindung daher ein Katalysatorpellet zur anionischen Polymerisation von Organosiloxanen und/oder zur Äquilibrierung von Organopolysiloxanen, umfassend

(i) mindestens ein (Erd)alkalimetalloxid, und
(ii) gegebenenfalls mindestens ein Bindemittel oder mindestens ein Trägermaterial,

dadurch gekennzeichnet, dass die $CO_2$-Desorptionsenthalpie des Katalysatorpellets 25-350 kJ/mol, bevorzugt 50-300 kJ/mol und stärker bevorzugt 50-200 kJ/mol beträgt, gemessen mittels temperaturprogrammierter Desorption von $CO_2$.

Komponente (i) umfasst mindestens ein (Erd)alkalimetalloxid. Bevorzugt ist das (Erd)alkalimetalloxid ausgewählt aus Natriumoxid, Kaliumoxid, Rubidiumoxid, Cäsiumoxid, Berylliumoxid, Magnesiumoxid, Calciumoxid, Strontiumoxid oder Bariumoxid, insbesondere Calciumoxid oder Magnesiumoxid, stärker bevorzugt Magnesiumoxid.

Das (Erd)alkalimetalloxid hat unabhängig voneinander bevorzugt einen mittleren Porenradius von 2-130 nm, bevorzugt 2-65 nm, stärker bevorzugt 2-35 nm. Der Porenradius wird gemäß DIN 66134 anhand des reinen (Erd)alkalimetalloxids ermittelt.

Ohne an eine Theorie gebunden zu sein, wird vermutet, dass ein kritischer mittlerer Porenradius von mindestens 2 nm für die Diffusion von Monomer (Organosiloxan) und Polymer, insbesondere linearem Organopolysiloxan, in die Pore und aus der Pore essentiell ist.

Das (Erd)alkalimetalloxid der Komponente (i) weist unabhängig voneinander ein spezifisches Porenvolumen von 0,2-1,2 ml/g auf, stärker bevorzugt von 0,2-0,6 ml/g, noch stärker bevorzugt von 0,2-0,45 ml/g, gemessen nach DIN 66134 anhand des reinen (Erd)alkalimetalloxids

Das (Erd)alkalimetalloxid der Komponente (i) hat unabhängig voneinander bevorzugt eine massenspezifische Oberfläche von 35-400 $m^2/g$, stärker bevorzugt 75-375 $m^2/g$, noch stärker bevorzugt 125-350 $m^2/g$, gemessen nach DIN ISO 9277 anhand des reinen (Erd)alkalimetalloxids.

In einer bevorzugten Ausführungsform besteht das Katalysatorpellet aus der Komponente (i).

In einer anderen Ausführungsform macht der Gewichtsanteil der Komponente (i) bezogen auf das Gesamtgewicht des Katalysatorpellets bevorzugt 0,1-100 Gew.- %, weiter bevorzugt von 1-100 Gew.-%, stärker bevorzugt 10-100

Gew.-%, noch stärker bevorzugt 20-99,9 Gew.-% und am stärksten bevorzugt 50-99,9 Gew.-% aus.

In einer bevorzugten Ausführungsform weist das Röntgendiffraktogramm von Magnesiumoxid als (Erd)alkalimetalloxid der Komponente (i) im Röntgendiffraktogramm (Kupfer-Ka: 0,154056 nm) die fünf stärksten Signale bei $2\theta = 37°, 43°, 62°, 75°$ und $78°$ auf.

In einer bevorzugten Ausführungsform weist das Röntgendiffraktogramm von Calciumoxid als (Erd)alkalimetalloxid der Komponente (i) im Röntgendiffraktogramm (Kupfer $K\alpha$: 0,154056 nm) die sechs stärksten Signale bei $2\theta = 32°, 37°, 53°, 64°, 67°$ und $79°$ auf. Das Röntgendiffraktogramm wird mittels dem Fachmann bekannter Verfahren gemessen, zum Beispiel mittels DIN EN 13925-1.

Das (Erd)alkalimetalloxid der Komponente (i) wird bevorzugt durch Kalzinieren des jeweiligen (Erd)alkalihydroxids, (Erd)alkalicarbonats, (Erd)alkalinitrats, (Erd)alkalisulfats, (Erd)alkaliacetats, (Erd)alkalioxalats, (Erd)alkaliphosphats, stärker bevorzugt des jeweiligen (Erd)alkalihydroxids erhalten.

Unter "Kalzinierung" oder "Kalzinieren" wird das kontrollierte Erhitzen von Stoffen verstanden, wobei Nebenprodukte, insbesondere $H_2O$ und/oder $CO_2$, im Falle von Erdalkalihydroxid insbesondere $H_2O$, abgespalten werden. Hierzu wird das jeweilige (Erd)alkaliausgangsmaterial (Hydroxid, Carbonat, Nitrat, Sulfat, Acetat, Oxalat, Phosphat) bei 300-900°C, stärker bevorzugt bei 350-650°C, noch stärker bevorzugt bei 375-550°C erhitzt. Die Kalzinierreaktion kann dazu in vorgesehenen Behältern, gegebenenfalls unter Rühren erfolgen. Die Dauer des Kalzinierverfahrens kann im Bereich von 10-240 Minuten, stärker bevorzugt im Bereich von 60-210 Minuten, noch stärker bevorzugt im Bereich von 90-150 Minuten durchgeführt werden. Die durch das Kalzinieren anfallenden Nebenprodukte können aus dem Reaktor kontinuierlich oder batchweise entfernt werden. Nach dem Ende der Kalzinierung wird das Material bei Standardumgebungsbedingungen, z.B. 1000 hPa, 20°C, abgekühlt. Die Kalzinierung und/oder Abkühlphase erfolgt bevorzugt unter Luft-, Sauerstoff- oder Inertgasatmosphäre, stärker bevorzugt unter Inertgasatmosphäre, wie zum Beispiel unter Stickstoff, Helium und/oder Argon.

Für das Kalzinieren werden die (Erd)alkalihydroxide, (Erd)alkalicarbonate, (Erd)alkalinitrate, (Erd)alkalisulfate, (Erd)alkaliacetate, (Erd)alkalioxalate, (Erd)alkaliphosphate, stärker bevorzugt (Erd)alkalihydroxide, in Form von Pulverpartikeln, Agglomeraten oder Pellet-Precursoren, bevorzugt Pellet-Precursoren verwendet. Insbesondere haben die Pulverpartikel oder Agglomerate eine mittlere Teilchengröße von etwa 0,5-450 $\mu$m, bevorzugt 1 $\mu$m-300 $\mu$m, gemessen gemäß DIN 66165.

In einer Ausführungsform kann das Katalysatorpellet mindestens ein Bindemittel oder mindestens ein Trägermaterial, bevorzugt mindestens ein Bindemittel, enthalten.

Bevorzugt ist das Bindemittel ausgewählt aus organischen oder anorganischen Bindemitteln. Organische Bindemittel sind bevorzugt Phenolharze, Polyisocyanate, Polyurethane, polymere Alkohole, Harnstoff-Aldehyd-Kondensate, Furfurylalkohol, Acrylsäure- und Acrylatdispersionen, Peroxide, Zuckeralkohole, Proteine, Epoxyharze, Furanharze, Kohlenhydrate, Zucker, Carboxymethylcellulose, Xanthan, Gelatine, Polyethylenglycole, Polyvinylalkohole, Polyvinylpyrrolidone oder Mischungen davon. Anorganische Bindemittel sind bevorzugt Schichtsilikate, insbesondere Bentonit, Natriumsilikat, Natriumaluminat, Alumosilikate, Kieselsäure und deren Ester, Sole oder kolloidale Lösungen von Siliciumdioxid. Bindemittel können mit dem (Erd)alkalimetalloxid beziehungsweise mit sich selbst kovalente oder elektrostatische Netzwerke ausbilden.

Bevorzugt ist das Trägermaterial der Komponente (ii) ausgewählt aus Aluminiumoxid, Zirkoniumoxid, Siliciumdioxid, Titanoxid, Titandioxid, Metallphosphat wie Hydroxylapatit, Ceroxid und Kohlenstoff sowie Mischoxiden wie z.B. $SiO_2$-$Al_2O_3$, $SiO_2$-$TiO_2$, $ZrO_2$-$SiO_2$, $ZrO_2$-$Al_2O_3$ oder Gemische von zwei oder mehreren dieser Materialien. Trägermaterialien sind bevorzugt inert und reagieren weder mit dem Katalysator noch mit sich selbst.

In einer bevorzugten Ausführungsform ist das Trägermaterial anders als das Bindemittel.

In einer bevorzugten Ausführungsform sind das Bindemittel sowie das Trägermaterial katalytisch inert.

In einer Ausführungsform ist das Katalysatorpellet frei von Bindemittel oder Trägermaterial. In einer anderen Ausführungsform ist das Bindemittel der Komponente (ii) in einem Anteil von 0-40 Gew.-%, stärker von 0-20 Gew.-%, noch stärker bevorzugt 0,1-15 Gew.-% und am stärksten bevorzugt 2-10 Gew.-% bezogen auf das Gesamtgewicht des Katalysatorpellets zugegen.

Das Trägermaterial der Komponente (ii) macht bevorzugt 0-99,9 Gew.-%, stärker bevorzugt 0-80 Gew.-% und noch stärker bevorzugt 0-50 Gew.-% bezogen auf das Gesamtgewicht des Katalysatorpellets aus.

Bevorzugt kann das Katalysatorpellet ferner umfassen (iii) mindestens ein Oxid eines Elements der 3. bis 12. Hauptgruppe oder der Lanthanoide. Als vorteilhaft haben sich insbesondere Cerium-, Lanthan-, Molybdän-, Zirkonium-, Mangan-, Titan-, Eisen-, Kobalt-, Nickel-, Kupfer- und Zinkoxid erwiesen, stärker bevorzugt Lanthan-, Cerium- und Kupferoxid. Die zusätzliche Komponente (iii) führt zu einer Ausbeuteerhöhung. Die Komponente (iii) ist bevorzugt in einem Gewichtsanteil von 1-50 Gew.-%, noch stärker bevorzugt 5-30 Gew.-%, am stärksten bevorzugt von 5-25 Gew.-%, bezogen auf das Gesamtgewicht der Komponente (i) zugegen.

Die obengenannten Oxide werden analog zur Komponente (i), bevorzugt durch Kalzinierung der Hydroxide, Carbonate, Nitrate, Acetate, Oxalate, Phosphate oder Sulfate der 3. bis 12. Hauptgruppe oder der Lanthanoide, erhalten.

In einer bevorzugten Ausführungsform hat das Katalysatorpellet einen Wassergehalt von 0,01-0,5 Gew.-%,

stärker bevorzugt 0,01-0,3 Gew.-%, bezogen auf das Gesamtgewicht des Katalysatorpellets.

Das Katalysatorpellet hat eine $CO_2$-Desorptionsenthalpie von 25-350 kJ/mol, bevorzugt von 50-350 kJ/mol und weiter bevorzugt von 50-200 kJ/mol, gemessen über die temperaturprogrammierte Desorption von $CO_2$ ($CO_2$-TPD). Die $CO_2$-TPD ist ein Maß für die Basenstärke des Katalysatorpellets, die für die katalytische Aktivität.bedeutsam ist. Die Messung erfolgt nach der Methode gemäß Leon et al. (M Leon, E. Diaz, A. Vega, S. Ordonez, A kinetic study of CO2 desorption from basic material: Correlation with adsorption properties, Chemical Engineering Journal, 2011, 157, 341-348). Der Inhalt der Referenz bezüglich Messverfahren und zugrundeliegender Theorie wird hiermit eingeschlossen.

Das Katalysatorpellet gemäß der vorliegenden Erfindung ist bevorzugt zylinderförmig oder sphärisch.

Das Katalysatorpellet ist bevorzugt eine separate Einheit und hat bevorzugt ein Gewicht von 0,01-200 g.

Bevorzugt liegt die innere Porosität ε des Katalysatorpellets in einem Bereich von 5-99,9 %, bevorzugt zwischen 15-90 % und weiter bevorzugt zwischen 20-80%, bezogen auf das geometrische Gesamtvolumen des Katalysatorpellets.

Die innere Porosität ε beschreibt das Verhältnis des inneren Hohlraumvolumens ($V_H$) zum geometrischen Gesamtvolumen ($V_P$) eines Katalysatorpellets. Sie ist definiert als:

$$\varepsilon = V_H/V_P$$

Experimentell wird das Hohlraumvolumen mittels Quecksilberporosimetrie (DIN 66133) bestimmt.

Das Katalysatorpellet hat eine massenspezifische Oberfläche von 0,25-1000 $m^2/g$, bevorzugt von 0,5-800 $m^2/g$, stärker bevorzugt 1 $m^2/g$ bis 600 $m^2/g$ gemessen gemäß DIN ISO 9277.

Bevorzugt werden die Katalysatorpellets als Schüttung (Partikelkollektiv) im Reaktor verwendet.

Der Sauterdurchmesser ist definiert als das Verhältnis des 6-fachen Gesamtvolumens des Partikelkollektivs $V_{P,gesamt}$ zur gesamten Oberfläche des Partikelkollektivs $S_{P,gesamt}$:

$$d_{32} = 6^* V_{P,gesamt}/S_{P,gesamt}$$

Zur Bestimmung der Gesamtoberfläche und des Gesamtvolumens des Partikelkollektivs geht man fiktiv davon aus, dass das innere freie Volumen der Partikel mit Feststoff ausgefüllt ist, so dass man auch von der geometrischen Oberfläche beziehungsweise von Volumina sprechen kann.

Bei Partikeln, die große, innere Volumina aufweisen, zählen die entstehenden Flächen zur geometrischen (äußeren) Oberfläche. Ein Beispiel hierfür sind Hohlraumzylinder.

Der Sauterdurchmesser $d_{32}$ wird auf das Verhältnis Volumen-zu-Oberfläche eines Partikelkollektivs bezogen und definiert den fiktiven Partikeldurchmesser der volumengleichen Kugeln, die insgesamt das gleiche Volumen/Oberflächenverhältnis aufweisen wie das Partikelkollektiv.

In einer bevorzugten Ausführungsform weist das Katalysatorpellet einen Sauterdurchmesser von 1-50 mm, weiter bevorzugt 1,5-20 mm und stärker bevorzugt 1,5-5 mm auf. Der Sauterdurchmesser wird gemäß DIN ISO 9276-2 bestimmt.

Ein weiterer Aspekt der Erfindung betrifft ein Verfahren zur Herstellung des oben beschriebenen Katalysatorpellets umfassend die Schritte

a) Bereitstellen eines (Erd)alkalihydroxids, eines (Erd)alkalicarbonats, eines (Erd)alkalinitrats, eines (Erd)alkalisulfats, eines (Erd)alkaliacetats, eines (Erd)alkalioxalats, eines (Erd)alkaliphosphats oder einer Mischung davon und ggf. mindestens eines Hydroxids, Carbonats, Nitrats, Acetats, Oxalats, Phosphats oder Sulfats eines Elements der 3.-12. Hauptgruppe oder der Lanthanoide als Ausgangsmaterial,

b)

  b1) ggf. Aufbringen des Ausgangsmaterials auf ein Trägermaterial, oder

  b2) ggf. Mischen des Ausgangsmaterials mit mindestens einem Bindemittel,

c) Bereitstellen des Ausgangsmaterials oder der nach Schritt b1) oder b2) erhaltenen Mischung als Pellet-Precursor,

d) ggf. Trocknung des nach Schritt c) erhaltenen Pellet-Precursors und

e) Kalzinieren des nach Schritt c) oder d) erhaltenen getrockneten Pellet-Precursors, um das Katalysatorpellet herzustellen.

In einer bevorzugten Ausführungsform umfasst der Pellet-Precursor

| | |
|---|---|
| 1-100 Gew.-% | Ausgangsmaterial, |
| 0-20 Gew.-% | Bindemittel oder |
| 0-99 Gew.-% | Trägermaterial, |

bezogen auf das Gesamtgewicht des Pellet-Precursors.

In einer Ausführungsform wird das Ausgangsmaterial nach Schritt a) gegebenenfalls mit mindestens einem Lösungsmittel vermischt und zu einem Pellet-Precursor geformt. Es kann sich bei dem Lösungsmittel um organische polare oder apolare Lösungsmittel handeln. Beispiele hierfür sind Wasser, Methanol, Ethanol, Isopropanol, Butanol, Aceton, Methylethylketon, Methylpropylketon, Xylol, Toluol, Cyclohexan, Heptan, Octan und Nonan, wobei Wasser, Methylethylketon, Isopropanol und Ethanol und insbesondere Wasser bevorzugt sind/ist.

Die Bereitstellung des Pellet-Precursors erfolgt über übliches Formen des Ausgangsmaterials gegebenenfalls in Mischung mit einem Lösungsmittel.

Bevorzugte Verfahren sind Granulieren, Pressen, Extrudieren, 3D-Drucken, Tablettieren und Sprühtrocknung.

In einer anderen Ausführungsform wird das Ausgangsmaterial auf ein Trägermaterial aufgebracht. Das Trägermaterial ist bevorzugt wie oben beschrieben. Das Aufbringen des Ausgangsmaterials auf das Trägermaterial erfolgt nach dem Fachmann bekannten Verfahren. Bevorzugt wird das Ausgansmaterial in mindestens einem Lösungsmittel gemischt, z.B. dispergiert oder gelöst, und in dieser Form auf das Trägermaterial aufgebracht. Bevorzugte Lösungsmittel sind bereits oben beschrieben.

In einer Ausführungsform kann das Trägermaterial bereits die Form des Pellet-Precurors darstellen. Das Bereitstellen des Pellet-Precursor in Schritt c) kann ggf. die Trocknung der nach Schritt b1) erhaltenen Mischung umfassen.

In einer weiteren Ausführungsform kann die nach Schritt b1) erhaltene Mischung zu einem Pellet-Precursor geformt werden. Geeignete Formverfahren sind Granulieren, Pressen, Extrudieren, 3D-Drucken, Tablettieren und Sprühtrocknung.

In einer weiteren Ausführungsform wird das Ausgangsmaterial, das Bindemittel und gegebenenfalls mindestens ein Lösungsmittel in Schritt b2) gemischt. Bevorzugte Lösungsmittel sind oben beschrieben. Die Mischung kann in üblichen Mischern, Taumlern und Mastikatoren durchgeführt werden. Der Anteil an Lösungsmittel in Schritt b2) liegt bevorzugt bei 0-99 Gew.-%, stärker bevorzugt bei 5-95 Gew.-%, am stärksten bevorzugt bei 10-90 Gew.-% bezogen auf das Gesamtgewicht der Mischung.

Die nach Schritt b2) erhaltene Mischung kann mit dem Fachmann bekannten üblichen Verfahren zu Pellet-Precursoren im Schritt c) geformt werden. Bevorzugte Verfahren sind Granulieren, Pressen, Extrudieren, 3D-Drucken, Tablettieren und Sprühtrocknung.

Der Pellet-Precursor hat bevorzugt eine dem Katalysatorpellet entsprechende Form.

Der Anteil an Lösungsmittel nach Schritt b) liegt bevorzugt bei 0-99 Gew.-%, stärker bevorzugt bei 5-95 Gew.-%, am stärksten bevorzugt bei 10- 90 Gew.-% bezogen auf das Gesamtgewicht der Mischung.

Gegebenenfalls kann im Schritt d) der nach Schritt c) erhaltene Pellet-Precursor z.B. bei 80-120 °C, getrocknet werden.

Der Lösungsmittelanteil nach Schritt c) oder d) liegt bevorzugt bei 0-10 Gew.-%, stärker bevorzugt 0-5 Gew.-% bezogen auf das Gesamtgewicht des Pellet-Precurors.

Gemäß Schritt e) wird der nach Schritt c) oder d) erhaltene Pellet-Precursor wie oben beschrieben kalziniert. Der Pellet-Precursor wird bevorzugt bei 300-900°C, stärker bevorzugt bei 350-650°C, noch stärker bevorzugt bei 375-550°C kalziniert. Die Kalzinierreaktion kann in dazu vorgesehenen Behältern, gegebenenfalls unter Rühren erfolgen. Die Dauer des Kalzinierverfahrens kann im Bereich vom 10-240 Minuten, stärker bevorzugt im Bereich von 60-210 Minuten, noch stärker bevorzugt im Bereich von 90-150 Minuten durchgeführt werden. Nach Ende der Kalzinierung wird das Material bei Standardumgebungsbedingungen z.B. bei 1000 hPa, 20°C, abgekühlt. Die Kalzinierung und/oder Abkühlphase erfolgt bevorzugt unter Luft-, Sauerstoff oder Inertgasatmosphäre, stärker bevorzugt unter Inertgasatmosphäre, wie zum Beispiel unter Stickstoff, Helium und/oder Argon.

Die vorliegende Erfindung betrifft weiterhin ein Katalysatorpellet, das durch das oben beschriebene Verfahren erhalten wird.

Ein weiterer Aspekt der vorliegenden Erfindung betrifft die Verwendung des oben beschriebenen Katalysatorpellets zur anionischen Polymerisation und/oder Äquilibrierung, insbesondere für die Polymerisation von zyklischen und linearen Organosiloxanen und/oder die Äquilibrierung von Organopolysiloxanen.

Unter "Äquilibrierung" wird die Umlagerung von Siloxanbindungen in einer Gleichgewichtsreaktion ohne Abspaltung von Wasser oder Alkohol verstanden.

Demgegenüber bezeichnet eine Kondensationsreaktion die Reaktion von zwei gebundenen Hydroxygruppen, insbesondere Si-gebundenen Hydroxygruppen, unter Abspaltung von Wasser oder die Reaktion einer gebundenen Hydroxygruppe, insbesondere einer gebundenen Si-Hydroxygruppe, mit einer gebundenen Alkoxygruppe, insbesondere

einer Si-gebundenen Alkoxygruppe, unter Abspaltung von Alkohol.

Überraschend wurde gefunden, dass mithilfe der spezifischen Katalysatoren funktionelle Organopolysiloxane, die mindestens eine Hydroxygruppe aufweisen, hergestellt werden können, ohne dass im Wesentlichen eine Kondensation zu höhermolekularen Organopolysiloxanen stattfindet. Bevorzugt erfolgen weniger als 5%, stärker bevorzugt 0,01-1% Kondensationsreaktionen bezogen auf die Gesamtheit der stattfindenden Polymerisationsreaktionen. Das durch die Kondensationsreaktionen entstandene Wasser im Produkt wurde gemessen über die Karl-Fischer-Titration nach ISO 760 und ist ein Maß für das Stattfinden von Kondensationsreaktionen.

Es hat sich ferner überraschenderweise herausgestellt, dass die Katalysatorpellets der vorliegenden Erfindung insbesondere geeignet sind, die Organosiloxanmonomere mit hoher Ausbeute zu den gewünschten Organopolysiloxanen umzusetzen. Es hat sich darüber hinaus gezeigt, dass die Katalysatorpellets aufbereitet werden können, zum Beispiel durch Kalzinierung, und für die oben genannten Reaktionen wiederverwendet werden können.

Ein weiterer Gegenstand der Erfindung ist ein Verfahren zur Polymerisation von Organosiloxanen und/oder zur Äquilibrierung von Organopolysiloxanen durch Umsetzen von

(A) Organocyclosiloxanen der allgemeinen Formel (I)

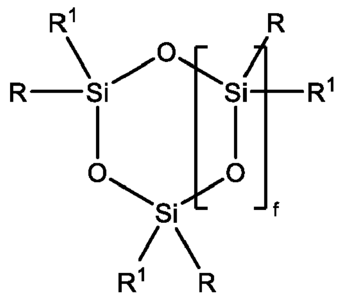

(I),

und/oder linearen Block-Organopolysiloxanen der allgemeinen Formel (II)

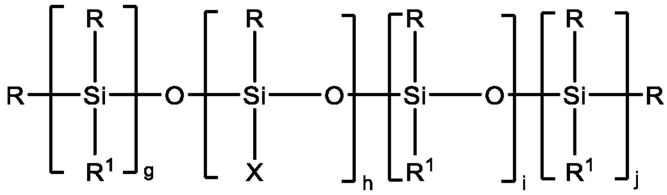

(II),

sowie linearen, statistischen oder alternierenden Organopolysiloxanen mit der Summenformel der allgemeinen Formel (II),

und gegebenenfalls einer Verbindung der allgemeinen Formel (III)

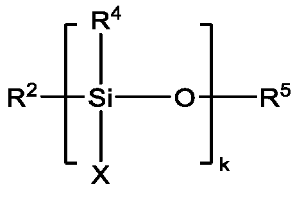

(III),

mit

(B) einem Initiator der allgemeinen Formel (IV)

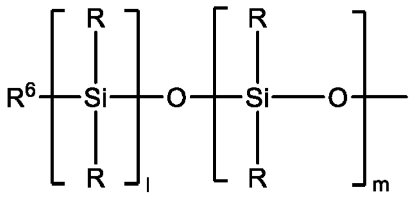
(IV),

wobei

- R unabhängig voneinander ein einwertiger, gegebenenfalls sub-stituierter $C_1$-$C_{30}$-Kohlenwasserstoffrest ist,
- $R^1$ unabhängig voneinander ein einwertiger, gegebenenfalls sub-stituierter $C_1$-$C_{30}$-Kohlenwasserstoffrest oder ein Polyetherrest ist,
- f eine ganze Zahl von 1 bis 10 ist, vorzugsweise eine ganze Zahl von 1 bis 4, insbesondere 2, ist,
- g 0 oder 1 ist,
- h 0 oder eine ganze Zahl von 1 bis 1000, bevorzugt 5-800, ist,
- i 0 oder eine ganze Zahl von 1 bis 1000, bevorzugt 5-800, ist,
- j 0 oder 1 ist,

mit der Maßgabe, dass mindestens eines g, h, i, oder $j \neq 0$ ist,

- $R^2$ eine Hydroxygruppe oder -$OR^3$ ist,
- $R^3$ ein einwertiger $C_1$-$C_{30}$-Kohlenwasserstoffrest ist,
- $R^4$ für k = 1 ein einwertiger $C_1$-$C_{30}$-Kohlenwasserstoffrest oder $R^1$ ist und für $k \neq 1$ unabhängig voneinander ein einwertiger $C_1$-$C_{30}$-Kohlenwasserstoffrest ist,
- $R^5$ ein Wasserstoff oder ein einwertiger $C_1$-$C_{30}$-Kohienwasserstoff-rest ist,
- X unabhängig voneinander ein einwertiger $C_1$-$C_{30}$-Kohlenwas-serstoffrest oder ein funktionalisierter Rest ist,
- k eine ganze Zahl von 1 bis 500 ist, bevorzugt 1 bis 400, weiter bevorzugt 1 bis 300
- $R^6$ R oder Wasserstoff ist,
- $R^7$ R oder Wasserstoff ist,
- l 0 oder 1 ist, mit der Maßgabe, dass wenn l = 0 ist, $R^6$ und/oder $R^7$ ein Was-serstoff sein muss und wenn $l \neq 0$ ist, $R^7$ ein Wasserstoffatom und $R^6$ R sein müssen, und
- m 0 oder eine ganze Zahl von 1 bis 100, bevorzugt 5-80 ist,

(C)in Gegenwart mindestens eines Katalysatorpellets wie oben definiert,

(D)gegebenenfalls in Gegenwart eines Lösungsmittels, und

(E) gegebenenfalls in Gegenwart eines Phasentransferkatalysators.

Der Rest R ist unabhängig voneinander ein einwertiger, gegebenenfalls substituierter $C_1$-$C_{30}$-Kohlenwasserstoffrest. Ein $C_1$-$C_{30}$-Kohlenwasserstoffrest im Sinn der Erfindung hat eine Summenformel mit 1-30 C-Atomen. Beispiele für $C_1$-$C_{30}$-Kohlenwasserstoffreste sind Alkylreste, wie Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-, Hexyl-, wie n-Hexyl-, Heptyl-, wie n-Heptyl-, Octyl-, wie n-Octyl- und isoOctyl-, wie z.B. 2,2,4-Trimethylpentyl-, Nonyl-, wie n-Nonyl-, Decyl-, wie n-Decyl-, Dodecyl-, wie n-Dodecyl-Reste, Alkenylreste, wie Vinyl-, Allyl-, 5-Hexenyl- und 10-Undecenylreste, Cycloalkylreste, wie Cyclopentyl-, Cyclohexyl-, Cycloheptyl- und Methylcyclohexylreste, Arylreste, wie Phenyl- und Naphthylreste; Alkarylreste, wie o-, m-, p-Tolylreste, Xylyl- und Ethylphenylreste, Aralkylreste, wie Benzyl-, $\alpha$- und $\beta$-Phenylethylreste, insbesondere Methyl- ,Ethyl-, iso-Propyl oder Allylrest.

In einer Ausführungsform ist der Kohlenwasserstoffrest R nicht substituiert. In einer anderen Ausführungsform ist der Kohlenwasserstoffrest substituiert. Geeignete Substituenten sind Halogen, wie zum Beispiel Fluor, Chlor, Brom, Iod, Acyloxy, (Meth)acryloxy, Silylalkyl, Vinyloxy, Thiol, Cyano, Carbonyl und Amino. Bevorzugte substituierte Kohlenwasserstoffreste R sind 3-Chlorpropyl, 3,3,3-Trifluor-n-propyl, 2,2,2,2'2',2'-Hexafluorisopropyl, Heptafluorisopropyl, Halogenaryl, insbesondere o-, m-, p-Chlorphenyl, Acetoxyethyl, (Meth)acryloxypropyl, 2-Acryloxyethyl, 2-(2-Acryloxyetoxy)-ethyl, Trimethylsilylmethyl, 4-Vinyloxy-1-butyl, 4-(Vinyloxymethyl)-cyclohexyl-1-methyl, 2-Mercapto-1-ethyl, 1-Mercaptopropyl, 2-Cyano-1-ethyl, 2-Oxo-1-propyl und 2-N,N-Dimethylamino-2-propyl.

$R^1$ ist unabhängig voneinander ein einwertiger, gegebenenfalls substituierter $C_1$-$C_{30}$-Kohlenwasserstoffrest wie oben definiert oder ein Polyetherrest. Der Polyetherrest ist bevorzugt ausgewählt aus einem Block-, statistischen oder alternierenden Polyether der allgemeinen Summenformel (V):

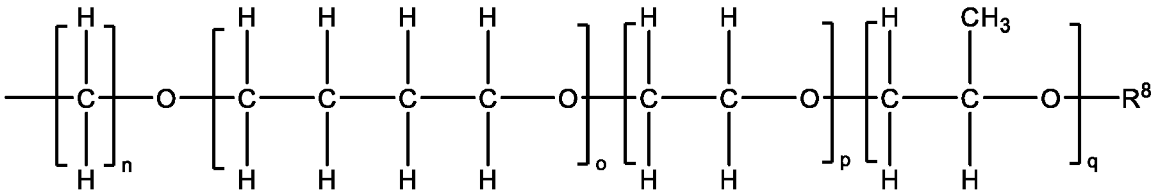

(V),

wobei

$R^8$ ein einwertiger, ggf. substituierter, $C_1$-$C_{30}$ Kohlenwasserstoff-rest wie oben definiert ist,

n 0 oder eine ganze Zahl von 2-30 ist,

o 0 oder eine ganze Zahl zwischen 1-50 ist,

p 0 oder eine ganze Zahl von 1-50 ist, und

q 0 oder eine ganze Zahl von 1-50 ist,

Bevorzugte Organocyclosiloxane der allgemeinen Formel (I) sind Cyclotrisiloxane, Cyclotetrasiloxane, Cyclopentasiloxane, Cyclohexasiloxane oder Mischungen davon. Insbesondere sind Hexamethylcyclotrisiloxan, Hexaethylcyclotrisiloxan, 1,3,5-Trimethyl-1,3,5-triethylcyclo-2,4,6-trisiloxan, 1,3,5-Trimethyl-1,3,5-triphenylcyclo-2,4,6-trisiloxan und 1,3,5-Trimethyl-1,3,5-tris(3,3,3-trifluorpropyl)cyclo-2,4,6-trisilo-xan, Octamethylcyclotetrasiloxan, 1,3,5,7-Tetramethyl-1,3,5,7-tetravinylcyclotetra-siloxan, 1,3,5,7-Tetrakis(3,3,3-trifluoropropyl)-1,3,5,7-tetramethylcyclotetrasiloxan, 2,4,6,8-Tetramethyl-2,4,6,8-tetraphenylcyclotetrasiloxan, Decamethylcyclopentasiloxan, 2,4,6,8,10-Pentaethenyl-2,4,6,8,10-pentamethylcyclopentasiloxan und Dodecamethylcyclohexasiloxan bevorzugt. Besonders bevorzugt ist das Organocyclosiloxan der allgemeinen Formel (I) Octamethylcyclotetrasiloxan.

Die lineraren Organopolysiloxane der allgemeinen Formel (II) können als Block-, statistisches oder alternierendes Polymer vorliegen, und haben die Summenformel

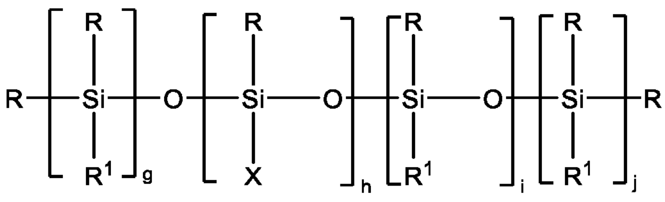

(II),

wobei

R, $R^1$ wie oben definiert sind,

g 0 oder 1 ist,

h 0 oder eine ganze Zahl von 1 bis 1000, bevorzugt von 5-800 ist,

i 0 oder eine ganze Zahl von 1 bis 1000, bevorzugt von 5-800 ist,

j 0 oder 1 ist. mit der Maßgabe, dass mindestens eines g, h, i, oder j $\neq$ 0 ist,

Die Organopolysiloxane der allgemeinen Formel (II) sind bevorzugt nicht reaktive Polyalkylsiloxane, wie Polymethylsiloxane, insbesondere Hexamethyldisiloxan.

In der Verbindung der allgemeinen Formel (III)

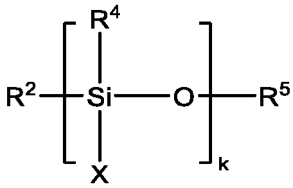

(III),

ist

$R^2$ eine Hydroxygruppe oder $-OR^3$, wobei $R^3$ bevorzugt ein einwertiger $C_1$-$C_{30}$-Kohlenwasserstoffrest - wie oben definiert - ist.

$R^4$ für k = 1 ein einwertiger $C_1$-$C_{30}$-Kohlenwasserstoffrest oder $R^1$ - wie oben definiert, und für k $\neq$ 1 unabhängig voneinander ein einwertiger $C_1$-$C_{30}$-Kohlenwasserstoffrest - wie oben definiert,

k eine ganze Zahl von 1 bis 500, bevorzugt 1 bis 400, weiter bevorzugt 1 bis 300

$R^5$ Wasserstoff oder ein einwertiger $C_1$-$C_{30}$-Kohlenwasserstoffrest - wie oben definiert,

X unabhängig voneinander ein einwertiger $C_1$-$C_{30}$ Kohlenwasserstoffrest - wie oben definiert oder ein funktionalisierter Rest, bevorzugt ausgewählt aus der allgemeinen Formel (VI)

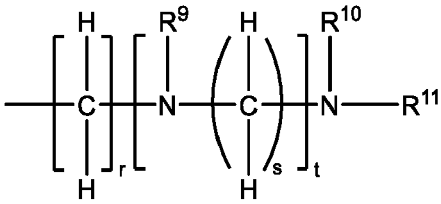

(VI),

wobei

$R^9$ R, ein Wasserstoff oder Acylrest, vorzugsweise ein Wasserstoff ist,

$R^{10}$ R oder ein Wasserstoff, vorzugsweise Wasserstoff ist,

$R^{11}$ R, ein Wasserstoff oder ein Acylrest, vorzugsweise Wasserstoff ist,

r eine ganze Zahl von 2 bis 3 ist,

s eine ganze Zahl von 1 bis 3 ist und

t 0 oder eine ganze Zahl von 1 bis 4, vorzugsweise 0 bis 1, ist.

Gemäß der vorliegenden Erfindung sind t insbesondere Aminoeinheiten und s insbesondere Methyleneinheiten, welche beliebig im funktionalisierten Rest verteilt sein können.

Bevorzugte Verbindungen der allgemeinen Formel (III) sind (3-Aminopropyl)diethoxymethylsilan, (3-Aminopropyl)dimethoxymethylsilan, (3-Aminopropyl)trimethoxymethylsilan, (3-Aminopropyl)triethoxymethylsilan, [N-(2-Aminoethyl)-3-aminopropyl]dimethoxymethylsilan, [N-(2-Aminoethyl)-3-aminopropyl]diethoxymethylsilan, [N-(2-Aminoethyl)-3-aminopropyl]trimethoxysilan, [N-(2-Aminoethyl)-3-aminopropyl]triethoxysilan, (Aminoethyl)dimethoxymethylsilan, (Aminoethyl)diethoxymethylsilan, (Aminoethyl)trimethoxysilan, (Aminoethyl)triethoxysilan, besonders bevorzugt sind (3-Aminopropyl)dimethoxymethylsilan, (3-Aminopropyl)trimethoxymethylsilan, [N-(2-Aminoethyl)-3-Aminopropyl)dimethoxymethylsilan, [N-(2-Aminoethyl)-3-Aminopropyl)trimethoxymethylsilan.

Verbindungen der allgemeinen Formel (IV) dienen als Initiatoren:

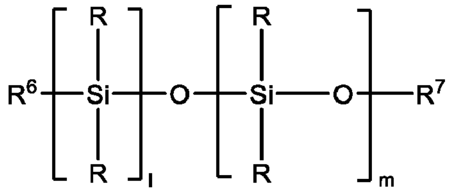

(IV),

wobei

- l 0 oder 1 ist,
  mit der Maßgabe, dass wenn $l = 0$ ist, $R^6$ und/oder $R^7$ ein Wasserstoff sein muss und wenn $l \neq 0$ ist, $R^7$ ein Wasserstoffatom und $R^6$ R sein müssen,
- m 0 oder eine ganze Zahl von 1 bis 100, insbesondere 5-80, ist,
- R wie oben definiert ist,
- $R^6$ R oder Wasserstoff ist und
- $R^7$ R oder Wasserstoff ist.

Verbindungen der allgemeinen Formel (IV) dienen als Initiatoren und umfassen Verbindungen mit mindestens einer Hydroxygruppe. Diese kann sowohl end- und/oder seitenständig sein. Bevorzugt sind Verbindungen mit einer endständigen Hydroxygruppe. Insbesondere bevorzugt sind Alkanole, Sil(oxa)nole, Hydroxyallylacrylate, Hydroxyallylmethacrylate, inbesondere Methanol, Ethanol, 1-Propanol, Isopropanol, 1-Butanol, 2-Butanol, tert.-Butanol, Trimethylsilanol, $\alpha,\omega$-Dihydroxypolydimethylsiloxan und Hydroxyethylmethacrylat, stärker bevorzugt Butanol oder Trimethylsilanol.

Der Initiator der allgemeinen Formel (IV) wird bevorzugt in Mengen von 0,003-1 mol, bevorzugt von 0,003-0,7 mol und besonders bevorzugt von 0,003-0,65 mol bezogen auf 1 mol der Verbindung der Formel (I) und/oder (II) verwendet. Die Menge an verwendetem Initiator steuert die mittlere Kettenlänge und entsprechend die Viskosität der hergestellten Organopolysiloxane.

Die verwendeten Initiatoren können Spuren von Wasser enthalten, welches zu unerwünschter Bildung von Dihydroxypolysiloxanen führt. Bevorzugt ist daher ein Wassergehalt des Initiators von unter 1 Gew.-%, stärker bevorzugt 0,0001-0,1 Gew.-%. Gegebenenfalls muss das im Initiator vorhandene Wasser vor der Reaktion durch Trocknungsmittel oder destillativ abgetrennt werden. Geeignete Trocknungsmittel sind wasserfreies Natriumsulfat, wasserfreies Magnesiumsulfat, wasserfreies Calciumsulfat, Zeolithe, Schichtsilikate oder Silikagel. Es kann von Vorteil sein, durch einen dem Katalysator vorgeschalteten Einbau von den genannten Trocknungsmitteln Feuchtigkeitsspuren in den Ausgangsverbindungen auszuschließen, um eine einheitlichere Produktqualität zu erreichen.

Das Katalysatorpellet ist wie oben beschrieben. Geeignete Katalysatoren können einzeln oder als Gemisch aus mindestens zwei beschriebenen Katalysatoren verwendet werden.

Weiterhin kann das Verfahren in Gegenwart eines Lösungsmittels stattfinden. Geeignete Lösungsmittel sind unpolare organische Lösungsmittel, insbesondere Xylol, Toluol, Cyclohexan, Heptan, Octan, Nonan oder Mischungen davon. Das Lösungsmittel kann bei Bedarf zur besseren Homogenisierung des Reaktionsgemisches hinzugefügt werden.

Zur Erhöhung der Reaktionsgeschwindigkeit können bei Bedarf auch aprotische, polare organische Lösungsmittel, gegebenenfalls auch als Mischung mit einem unpolaren organischen Lösungsmittel wie oben beschrieben, verwendet werden.

Beispiele für aprotische, polare organische Lösungsmittel sind Dimethylsulfoxid, Acetonitril, Aceton, Tetrahydrofuran, Methylethylketon, Methylpropylketon, Dimethylformamid oder Mischungen davon.

Zur weiteren Erhöhung der Reaktionsgeschwindigkeit sowie Selektivität können der Reaktion ferner Phasentransferkatalysatoren zugesetzt werden. Übliche Phasentransferkatalysatoren sind dem Fachmann bekannt. Bevorzugt werden Benzyltriethylammoniumchlorid, Kronenether, wie zum Beispiel 18-Krone-6 und 12-Krone-4, Polyethylenglycoldiethylether oder tertiäre Amine, wie 4-Dimethylaminopyridin oder N,N-Dimethylcyclohexylamin verwendet.

Bevorzugt ist der Katalysator (C) in einem anderen Aggregatszustand als die Komponenten (A), (B) und (D).

Bevorzugt wird das erfindungsgemäße Verfahren in einem kontinuierlichen Prozess durchgeführt. Bevorzugt sind Reaktoren, in denen das Katalysatorpellet immobilisiert ist. Besonders bevorzugte Reaktoren sind daher Festbettreaktoren, Rohrreaktoren und Kreislaufreaktoren. Besonders bevorzugte Kreislaufrektoren sind beispielsweise in EP 3 374 077 beschrieben, deren Inhalt auch Gegenstand der vorliegenden Erfindung ist.

Das Verfahren wird bevorzugt in einem Temperaturbereich von 60-200°C, stärker bevorzugt 80-180°C, noch stärker bevorzugt 120-170°C durchgeführt. Die Reaktion kann unter Normaldruck, bei erhöhtem oder reduziertem Druck stattfinden. Bevorzugt findet das Verfahren unter Normalbedingungen, insbesondere bei 950-1100 hPa, statt.

Bevorzugt wird die Reaktion mit einer Weight Hourly Space Velocity (WHSV) im Bereich von 1-30 $h^{-1}$, bevorzugt 3-30 $h^{-1}$, noch stärker bevorzugt 3-24 $h^{-1}$, am meisten bevorzugt in einem Bereich von 3-15 $h^{-1}$ durchgeführt.

Die Weight Hourly Space Velocity bezeichnet das Gewicht der Beschickung, die pro Gewichtseinheit des Katalysators pro Stunde fließt. Da das Gewicht des in den Reaktor eingebrachten Katalysators bevorzugt nicht verändert wird und bevorzugt immer gleich ist, ändert jede Veränderung des Flüssigkeitsstroms pro Stunde die Weight Hourly Space Velocity.

Die Verweilzeit im Reaktor variiert je nach Menge des eingesetzten Katalysators, der Länge des Festbetts, der Reaktionstemperatur des Volumenstroms sowie der Art und Menge der verwendeten Reaktionspartner. Sie liegt vorzugsweise im Bereich von 5 Minuten bis 48 Stunden, bevorzugt zwischen 5 Minuten und 24 Stunden, weiter bevorzugt zwischen 5 Minuten und 6 Stunden und am meisten bevorzugt in einem Bereich zwischen 5 Minuten und 4 Stunden.

Die Reaktion kann bis zum Vollumsatz oder bis zum Erreichen des Gleichgewichtspunktes durchgeführt werden. Beim Gleichgewichtspunkt ist die maximale Viskosität erreicht, ein weiterer Viskositätsanstieg ist nicht mehr zu beobachten. Alternativ kann die Umsatzkontrolle über die Bestimmung des Trockenrückstandes, im Weiteren Trockensubstanz genannt, in Anlehnung an DIN EN 12880 bestimmt werden. Die Reaktion kann aber auch schon vor dem Erreichen des Vollumsatzes beziehungsweise des Gleichgewichtspunktes abgebrochen werden.

Es hat sich herausgestellt, dass der erfindungsgemäße Katalysatorpellet über die Laufzeit des erfindungsgemäßen Herstellungsverfahrens stabil ist. "Stabil" im Sinne der vorliegenden Anmeldung bedeutet, dass der Katalysator nach einer Laufzeit von 200 Stunden eine Aktivitätseinbuße von weniger als 10%, bevorzugt weniger als 5 % aufweist.

Ferner hat sich herausgestellt, dass die erfindungsgemäßen Katalysatoren lagerstabil sind. "Lagerstabil" im Sinne der vorliegenden Erfindung bedeutet, dass die Aktivität des Katalysators direkt nach der Kalzinierung im Wesentlichen unverändert bleibt zur Aktivität des Katalysators 80 Tage nach Kalzinierung (Lagerung bei Raumtemperatur unter Luftausschluss).

Sollte die Aktivität des Katalysators nach sehr langen Laufzeiten oder sehr langer Lagerung abnehmen, hat sich überraschenderweise gezeigt, dass die Aktivität des Katalysators durch ein erneutes Kalzinierverfahren im Wesentlichen wiederhergestellt werden kann. Hierzu wird der verbrauchte Katalysator - sofern erforderlich - bevorzugt zunächst von organischen Resten mittels Lösungsmittel, zum Beispiel Isopropanol oder Aceton gereinigt und anschließend für zwei bis fünf Stunden bei 300-500°C erhitzt. Durch die Reaktivierung kann eine Aktivität von 90-100% der ursprünglichen Aktivität wiederhergestellt werden.

Es wird vermutet, dass durch den erneuten Kalzinierungsschritt die Oberfläche des Katalysators von Organopolysiloxanverkrustungen und von gegebenenfalls adsorbiertem Wasser und Kohlenstoffdioxid befreit werden kann, so dass die ursprünglichen Aktivitätszentren an der Oberfläche des Katalysators wiederhergestellt werden.

Gemäß dem erfindungsgemäßen Verfahren muss die Reaktion nicht abgestoppt werden oder das Produkt von Katalysator separiert werden. Es besteht weiterhin auch keine Notwendigkeit, das Reaktionsgemisch durch Säure zu deaktivieren.

In einem weiteren Aspekt betrifft die Erfindung ein Organopolysiloxan, das erhältlich ist durch das oben beschriebene Verfahren.

Bevorzugt besitzen die erfindungsgemäßen Organopolysiloxane eine Viskosität von 5-$10^4$ mPas, stärker bevorzugt von 5-5000 mPas, noch stärker bevorzugt von 5-2000 mPas, gemessen nach DIN 53019 bei 20°C.

Die vorliegende Erfindung wird anhand der nachfolgenden Ausführungsbeispiele näher erklärt. Die Erfindung ist allerdings nicht darauf beschränkt.

## Ausführungsbeispiele

### 1. Herstellung des Katalysators

#### 1.1. Herstellung des pulverförmigen Katalysators

10 g pulverförmiges Magnesiumhydroxid wurde in einen Schmelztiegel eingewogen und bei 80 und 120 °C für jeweils 1 Stunde getrocknet. Das getrocknete Magnesiumhydroxid wurde anschließend in einem Temperaturbereich von 400 bis 700 °C für eine Dauer von 10 bis 240 Minuten unter statischer Luft kalziniert. Das so gewonnene Magnesiumoxid wurde luftdicht gelagert.

1.2. Herstellung der Katalysatorpellets

7,5 g Natriumbentonit wurde mit 135 g demineralisiertem Wasser vermengt und mit einer Dispersionsscheibe bei 2000 rpm für 2 Stunden suspendiert. Der Suspension wurden 142,5 g Magnesiumhydroxid zugesetzt. Unter Verwendung eines Ankerrührers wurde das Gemisch zu einer homogenen Paste verarbeitet. Durch Extrusion wurde die Paste zu 3 mm im Durchmesser breiten Extrudaten verarbeitet. Diese wurden anschließend bei 80 und 120 °C für jeweils 1 Stunde getrocknet. Eine Siebfraktion im Bereich von 2-5 mm in der Länge der Partikel wurde durch das Brechen und Sieben der getrockneten Extrudate erreicht. Die so gewonnene Siebfraktion wurde anschließend in einem Temperaturbereich von 300 bis 700 °C für eine Dauer von 5 bis 180 Minuten unter statischer Luft kalziniert. Die so gewonnenen, kalzinierten Extrudate wurde luftdicht gelagert.

Neben den Extrudaten aus $Mg(OH)_2$ wurden zudem Pellets geformt aus einer Mischung aus $Mg(OH)_2$ und $La(OH)_3$. Das Gewichtsverhältnis der Oxide $La_2O_3$: MgO betrug dabei 1:9. Die Menge an anorganischem Binder Natriumbentonit belief sich auf 10% bezogen auf das Ausgangsmaterial $La(OH)_3$ und $Mg(OH)_2$. Die Herstellung der Extrudate erfolgte wie bereits oben beschrieben. Die Kalzinierung erfolgte unter statischer Luft für 180 Minuten bei 500°C. Die so hergestellten Katalysatorpellets werden im weiteren MgLaONaBe500 genannt.

1.3. Effekt der Kalzinierung

Um den Einfluss der Kalzinierung auf die katalytische Fähigkeit von Metalloxiden gegenüber der Polymerisation und/oder Äquilibrierung von Siloxanen zu untersuchen, wurde unbehandeltes Magnesiumoxid mit kalziniertem verglichen. Das verwendete Magnesiumoxid hatte eine Reinheit von 99,995%. Die Kalzinierung erfolgte bei 600 °C für 3 h unter statischer Luft (MgO600). Anschließend wurden das unbehandelte und das kalzinierte Magnesiumoxid bei 80 °C und anschließend bei 120 °C für jeweils 1 h getrocknet. Es wurden jeweils 0,5 g der Magnesiumoxidproben in ein Reaktionsgefäß eingewogen, mit 0,5 g entmineralisiertem Wasser und mit 50 g Octamethylcyclotetrasiloxan versetzt und gerührt. Die Reaktionstemperatur betrug 100 °C. Nach 2 h erfolgte die Umsatzkontrolle über die Bestimmung der Trockensubstanz Die erhaltenen Umsätze betrugen für das unbehandelte MgO 0,22 % und für MgO600 17,35 % (Abbildung 0).

2. Charakterisierung des pulverförmigen Katalysators

Pulverförmiges Magnesiumoxid wurde gemäß 1.1. hergestellt. Das Magnesiumoxid wurde bei 400, 500, 600 und 700 °C kalziniert. Die Kalzinierungsdauer betrug jeweils 3 h. Die so hergestellten Katalysatoren wurden entsprechend ihrer Kalzinierungstemperatur als MgO400, MgO500, MgO600 und MgO700 bezeichnet.

2.1. Porengrößenverteilung und Porenvolumen

Die Bestimmung der Porengrößenverteilung (total pore volume TPV) und des Porenvolumens erfolgte über $N_2$-Physisorption mit einem Analysegerät Nova 4000e der Firma Quantachrome Instruments. Nach Einwaage des Katalysators in die Messzelle, wurde die Probe für 3 h bei 120 °C unter Vakuum entgast. Anschließend wurde die Adsorptions- und die Desorptionsisotherme bei konstanter Temperatur von 77 K durch Zuhilfenahme von flüssigem Stickstoff gemessen. Die Berechnung der Porengrößenverteilung und des Porenvolumens erfolgte über die Barett, Joyner und Halenda (BJH) - Methode (DIN 66134)

Der Einfluss der Kalzinierungstemperatur auf die Porengrößenverteilung (total pore volume TPV) und das Porenvolumen ist in Abbildung 1 und 2 dargestellt. Es ist zu erkennen, dass der mittlere Porenradius mit steigender Kalzinierungstemperatur von 1,5 zu 9,5 nm zunimmt. Zudem nimmt das Porenvolumen mit steigender Kalzinierungstemperatur zu und erreicht bei 600 °C ein Maximum von 0,31 cc.

2.2. Massenspezifische Oberfläche

Die Bestimmung der massenspezifischen Oberfläche (Sm) erfolgte über $N_2$-Physisorption mit einem Analysegerät Nova 4000e der Firma Quantachrome Instruments. Nach der Einwaage des Katalysators in die Messzelle, wurde die Probe für 3 h bei 120 °C unter Vakuum entgast. Anschließend wurde die Adsorptionsisotherme bei konstanter Temperatur von 77 K durch Zuhilfenahme von flüssigem Stickstoff gemessen. Die Messung und Berechnung der massenspezifischen Oberfläche erfolgten über die Brunauer-Emmett-Teller (BET) - Methode (DIN ISO 9277)

Die Ergebnisse sind in Abbildung 3 für MgO400, MgO500, MgO600 und MgO700 dargestellt. Der Graphik kann entnommen werden, dass mit steigender Kalzinierungstemperatur eine Abnahme der massenspezifischen Oberfläche zu beobachten ist. Die massenspezifische Oberfläche von MgO400 beträgt 220 $m^2/g$ und nimmt kontinuierlich mit steigender Kalzinierungstemperatur ab. So weist MgO700 nur noch eine Oberfläche von 55 $m^2/g$ auf.

2.3. Herstellung von Magnesiumoxid in Abhängigkeit der Kalzinierungsdauer

Über Infrarotmessung wurde der Effekt der Kalzinierungsdauer auf Magnesiumhydroxid bei einer Kalzinierungstemperatur von 400 °C untersucht. Die Banden für reines und für 1, 2 und 3 h kalziniertes Magnesiumhydroxid sind in Abbildung 4 dargestellt. Gut zu erkennen ist für die Kalzinierungsdauer von 0 und 1 h die Bande bei 3700 $cm^{-1}$, welche auf die -OH Schwingung im $Mg(OH)_2$ zurückzuführen ist. Diese verschwindet nach einer Kalzinierungsdauer von 2 beziehungsweise 3 h vollständig. Es ist deshalb davon auszugehen, dass die Umsetzung von Magnesiumhydroxid zu Magnesiumoxid nach 2 h größtenteils abgeschlossen ist.

2.4. Umsatz

Um die Aktivität der hergestellten Magnesiumoxidpulver als Katalysatoren für die Polymerisation und/ oder Äquilibrierung von Organosiloxanen zu testen, wurden in einem ersten Schritt die gemäß 1.1. hergestellten Pulver für 2 h bei 120 °C getrocknet. Dies sorgte für eine gleichmäßige Wasserbeladung von 0,3%, welches als Initiator diente. Anschließend wurde 0,5 g Magnesiumoxid mit 75 g Octamethylcyclotetrasiloxan (OMCTS) versetzt und bei 100 °C gerührt. Nach 2 h wurde das Magnesiumoxid abfiltriert und der Umsatz über die Trockensubstanz bestimmt.

Überraschend wurden die höchsten Umsätze mit Magnesiumoxid, welches bei 400 und bei 500 °C kalziniert wurde, erzielt (Abbildung 5). Für MgO600 und MgO700 nahmen die Umsätze kontinuierlich ab.

3. Charakterisierung der Katalysatorpellets

Die verwendeten Katalysatorpellets wurden gemäß 1.2. hergestellt. Die Pellets wurden bei 400, 500 und 600 °C kalziniert. Die Kalzinierungsdauer betrug jeweils 3 h. Die so hergestellten Katalysatorpellets wurden entsprechend ihrer Kalzinierungstemperatur als MgNaBe400, MgNaBe500 und MgNaBe600 bezeichnet.

3.1. Massenspezifische Oberfläche

Die Bestimmung der massenspezifischen Oberfläche (Sm) erfolgte über $N_2$-Physisorption mit einem Analysegerät Nova 4000e der Firma Quantachrome Instruments. Nach der Einwaage der Katalysatorpellets in die Messzelle, wurden die Proben für 3 h bei 120 °C unter Vakuum entgast. Anschließend wurde die Adsorptionsisotherme bei konstanter Temperatur von 77 K durch Zuhilfenahme von flüssigem Stickstoff gemessen. Die Messung und Berechnung der massenspezifischen Oberfläche erfolgten über die Brunauer-Emmett-Teller (BET) - Methode (DIN ISO 9277).

Es konnten massenspezifische Oberflächen von 71,99 $m^2/g$ für MgNaBe400, 64,40 $m^2/g$ für MgNaBe500 und 44,82 $m^2/g$ für MgNaBe600 gemessen werden.

3.2. Porengrößenverteilung und Porenvolumen

Die Bestimmung des Porenvolumens und der Porengrößenverteilung erfolgte über die Quecksilberporosimetrie nach DIN 66133. Vor der Messung wurden die Extrudate für 1 h bei 120 °C getrocknet und in einem Exsikkator auf Raumtemperatur abgekühlt.

Es konnten Porenvolumina von 0,758 ml/g für MgNaBe400, 0,827 ml/g für MgNaBe500 und 0,746 ml/g für MgNaBe600 ermittelt werden. Der mittlere Porenradius betrug 0,217 $\mu$m für MgNaBe400, 0,220 $\mu$m für MgNaBe500 und 0,201 $\mu$m für MgNaBe600.

3.3. Temperatur-programmierte-Desorption von $CO_2$ als Maß für die Basenstärke

Über $CO_2$-Adsorption wurde die Basenstärke der unter 1.2. hergestellten Katalysatorpellets untersucht. Zunächst wurden die Proben unter Heliumatmosphäre ausgeheizt. Die Ausheiztemperatur richtete sich dabei nach der Kalzinierungstemperatur. Für die Pellets, welche bei 500 beziehungsweise bei 600 °C kalziniert worden sind, betrug die Ausheiztemperatur 480 °C, wohingegen für die Pellets, welche bei 400°C kalziniert worden sind, die Ausheiztemperatur 400°C betrug. Anschließend erfolgte die $CO_2$-Adsorption in einer 100 % $CO_2$-Atmosphäre bei Raumtemperatur, gefolgt von einem Spülvorgang um leicht adsorbiertes $CO_2$ von der Oberfläche zu entfernen. Über eine Temperaturrampe von 10 °C/min wurde nun die Desorption von $CO_2$ durch eine nachgeschaltete Gaschromatographie bestimmt.

Die Ergebnisse sind in Abbildung 6 für die Pellets, welche unter 1.2. hergestellt wurden, dargestellt. Alle 3 Katalysatorpellets weisen $CO_2$-Desorptionsmaxima bei 100 °C auf. Überraschenderweise weisen MgNaBe400 und MgNaBe500 einen weiteren Peak bei 175 °C auf. Als einziges besitzt MgNaBe400 zusätzlich einen dritten Peak, welcher bei T>450 °C liegt. Ohne an eine Theorie gebunden zu sein, scheint MgNaBe400 und MgNaBe500 über stärkere basische Zentren zu verfügen im Vergleich zu MgNaBe600.

Unter Zuhilfenahme der Arrhenius- und Kissingergleichung (siehe Leon et al.) wurde die $CO_2$-Desorptionsenthalpien bestimmt. Diese lagen bei einer Ausheiztemperatur für 100 °C bei 59 kJ/mol, für 175 °C bei 90 kJ/mol und für 450 °C bei 200 kJ/mol.

4. Festbettreaktor

Um den unter Punkt 2. charakterisierten Katalysator unter kontinuierlichen Reaktionsbedingungen zu testen, wurde dieser wie unter 1.2. beschrieben in Pelletform gebracht um einen erhöhten Druckverlust im Festbett zu vermeiden. Das eingesetzte Natriumbentonit zeigte keine katalytische Aktivität gegenüber der Polymerisation und/oder Äquilibrierung von Siloxanen, sodass von Magnesiumoxid als katalytischer Spezies auszugehen ist.

Der verwendete Reaktor bestand aus 4 hintereinandergeschalteten, modularen Edelstahlröhren mit einem Innendurchmesser von 1,2 cm und einer Höhe von 50 cm, welches einem Gesamtreaktionsvolumen von 56 $cm^3$ pro Säule entspricht Das Katalysatorvolumen entsprach insgesamt 50 $cm^3$ pro Säule. Das Festbett konnte über einen Heizmantel in einem Temperaturbereich von 25 bis 200 °C aufgeheizt werden. Die Reaktionstemperatur betrug 80 bis 160 °C und die WHSV wurde in einem Bereich von 10 bis 30 $h^{-1}$ variiert. Die Eduktlösung unterschiedlicher Zusammensetzung wurde über eine Zahnradpumpe in den Reaktor gefördert.

Beispiel 1

Eine Eduktlösung bestehend aus 483,6 g Octamethylcyclotetrasiloxan mit 16,4 g 1-Butanol wurde mit einer WHSV von 3 $h^{-1}$ kontinuierlich in das Festbett gepumpt. Als Festbett wurden 10 g des unter 1.2. hergestellten Katalysators MgONaBe600 eingesetzt. Die Temperatur des Festbettes wurde auf 140 °C gehalten. Das Produkt wurde am Rotationsverdampfer bei 140 °C und 5 mbar eingeengt. Man erhielt ein klares farbloses Öl mit einer Viskosität von 150 mPas bei 25 °C und entsprach nach den Ergebnissen des $^{29}$Si- und $^{1}$H-NMR-Spektrums (Abbildung 7 und 8) einem Silicon der folgenden Formel:

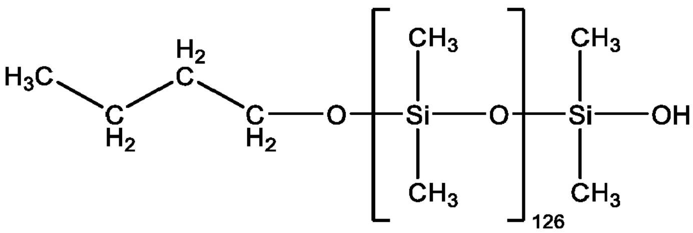

Beispiel 2

Eine Eduktlösung bestehend aus 270 g Octamethylcyclotetrasiloxan, 30 g 2,4,6,8-Tetravinyl-2,4,6,8-tetramethylcyclotetrasiloxan und 6,12 g Trimethylsilanol wurde mit einer WHSV von 6 $h^{-1}$ kontinuierlich in das Festbett gepumpt. Als Festbett wurden 10 g des unter 1.2. hergestellten Katalysators MgONaBe600 eingesetzt. Die Temperatur des Festbettes wurde auf 140 °C gehalten. Man erhielt ein klares farbloses Öl mit einer Viskosität von 130 mPas bei 25 °C und entsprach nach den Ergebnissen eines $^{29}$Si- und $^{1}$H-NMR-Spektrums einem Silicon der folgenden Formel:

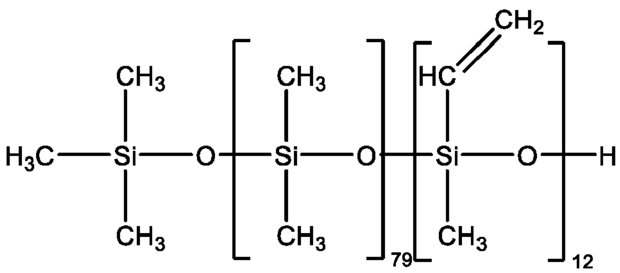

Beispiel 3

Eine Eduktlösung bestehend aus 117 g Octamethylcyclotetrasiloxan, 12 g eines 3-Aminopropyldiethoxysilans und 110 g eines $\alpha,\omega$-Dihydroxypolydimethylsiloxans wurde mit einer WHSV von 6 $h^{-1}$ kontinuierlich in das Festbett gepumpt. Als Festbett wurden 10 g des unter 1.2. hergestellten Katalysators MgONaBe600 eingesetzt. Die Temperatur

des Festbettes wurde auf 140 °C gehalten. Das Produkt ist ein klares farbloses Öl mit einer Viskosität von 130 mPas bei 25 °C und entspricht nach den Ergebnissen eines $^{29}$Si- und $^{1}$H-NMR-Spektrums einem Silicon der folgenden Formel:

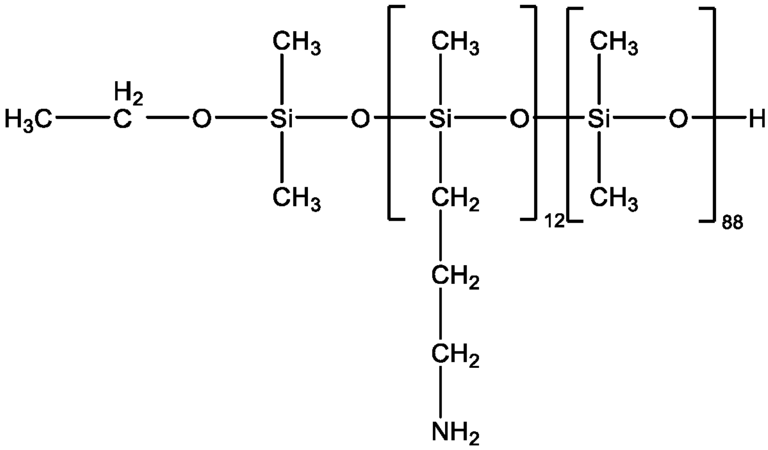

Beispiel 4

Eine Eduktlösung bestehend aus 483,6 g Octamethylcyclotetrasiloxan, 16,4 g 1-Butanol und 10 g Dimethylsulfoxid wurden mit einer WHSV von 3 $h^{-1}$ kontinuierlich in das Festbett gepumpt. Als Festbett wurden 10 g des unter 1.2. hergestellten Katalysators MgONaBe600 eingesetzt. Die Temperatur des Festbettes wurde auf 140 °C gehalten. Es zeigte sich, dass durch den Einsatz von Dimethylsulfoxid die Verweilzeit um 30 % reduziert werden konnte im Vergleich zum Beispiel 1. Das so erhaltene Produkt wurde am Rotationsverdampfer bei 140 °C und 5 mbar eingeengt. Man erhielt ein klares farbloses Öl mit einer Viskosität von 150 mPas bei 25 °C und entsprach nach den Ergebnissen des $^{29}$Si- und $^{1}$H-NMR-Spektrums einem Silicon der folgenden Formel:

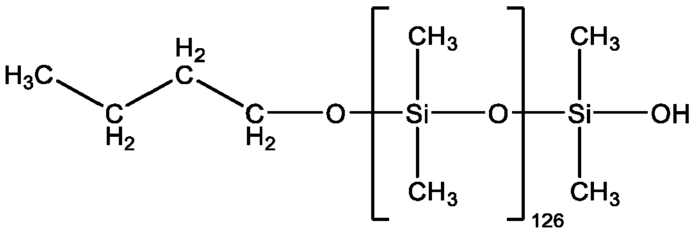

Der Gewichtsanteil von Dimethylsulfoxid Im Produkt nach der Destillation betrug weniger als 0,05 %.

Beispiel 5

Eine Eduktlösung, wie im Beispiel 1, bestehend aus 483,6 g Octamethylcyclotetrasiloxan mit 16,4 g 1-Butanol wurde bereitgestellt. Als Festbett wurden 10 g des unter 1.2. hergestellten Katalysators MgLaONaBe500 eingesetzt. Die Temperatur des Festbettes wurde auf 140 °C gehalten. Die WHSV mit der der Eingangsstrom ins Festbett gepumpt wurde, konnte im Vergleich zum Beispiel 1 von 3 auf 6 $h^{-1}$ erhöht werden um dennoch gleiche Umsätze wie im Beispiel 1 zu erhalten. Das Produkt wurde am Rotationsverdampfer bei 140 °C und 5 mbar eingeengt. Man erhielt ein klares farbloses Öl mit einer Viskosität von 150 mPas bei 25 °C und entsprach nach den Ergebnissen des $^{29}$Si- und $^{1}$H-NMR-Spektrums einem Silicon der folgenden Formel:

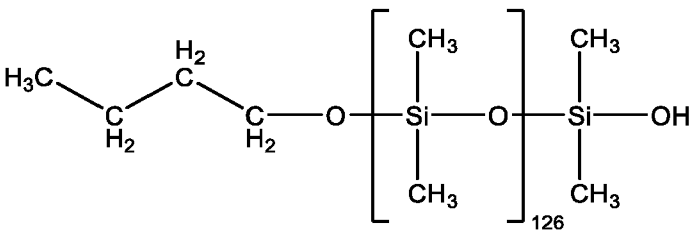

Beispiel 6

Um den Anteil der Kondensationsreaktionen an den Polymerisationsreaktionen bestimmen zu können, wurde ein reines α,ω-Dihydroxypolydimethylsiloxan durch das Festbett geleitet. Aufgrund der Hydroxygruppen an den terminalen Enden des Siloxans, würde bei einer Polykondensation Wasser abgespalten werden.

Mittels Karl-Fischer-Titration wurde daher das undestillierte Produkt auf seinen Wassergehalt untersucht.

Hierfür wurde eine Eduktlösung bestehend aus 500 g eines α,ω-Dihydroxypolydimethylsiloxans bereitgestellt. Der Wassergehalt der Eduktlösung, bestimmt nach ISO 760, betrug 0,16 %. Als Festbett wurden 10 g des unter 1.2. hergestellten Katalysators MgONaBe600 eingesetzt. Die Temperatur des Festbettes wurde auf 80 °C gehalten. Die WHSV mit der der Eingangsstrom ins Festbett gepumpt wurde, betrug 3 $h^{-1}$. Es wurde ein undestilliertes, klares farbloses Öl erhalten, welches einen Wassergehalt von 0,07 % aufwies. Es entsprach nach den Ergebnissen des $^{29}$Si- und $^{1}$H-NMR-Spektrums einem Silicon der folgenden Formel:

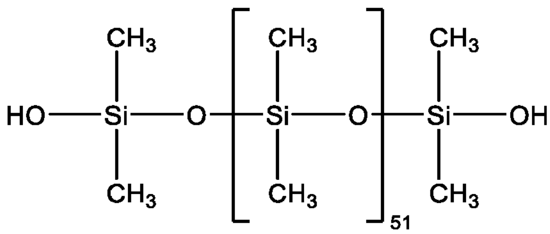

Aus der reduzierten Wassermenge im Endprodukt kann geschlossen werden, dass ein Teil des Wassers als Initiator fungiert hat, aber im Wesentlichen keine Kondensationsreaktion stattgefunden hat.

Die vorliegende Erfindung ist durch folgende Punkte definiert:

1. Katalysatorpellet zur anionischen Polymerisation von Organosiloxanen und/oder zur Äquilibrierung von Organopolysiloxanen umfassend

(i) mindestens ein (Erd)alkalimetalloxid und
(ii) ggf. mindestens ein Bindemittel oder mindestens ein Trägermaterial,

dadurch gekennzeichnet, dass die $CO_2$-Desorptionsenthalpie des Katalysatorpellets 25-350 kJ/mol, bevorzugt 50-300 kJ/mol und besonders bevorzugt von 50-200 kJ/mol beträgt, gemessen mittels temperaturprogrammierter Desorption von $CO_2$.

2. Katalysatorpellet nach Punkt 1, wobei das (Erd)alkalimetalloxid (i) Natriumoxid, Kaliumoxid, Rubidiumoxid, Cäsiumoxid, Berylliumoxid, Magnesiumoxid, Calciumoxid, Strontiumoxid oder Bariumoxid ist, insbesondere Calciumoxid oder Magnesiumoxid, besonders bevorzugt Magnesiumoxid ist.

3. Katalysatorpellet nach einem der vorhergehenden Punkte, wobei das (Erd)alkalimetalloxid (i) einen mittleren Porenradius von 2-130 nm, bevorzugt 2-65 nm, stärker bevorzugt 2-35 nm, gemessen nach DIN 66134, aufweist.

4. Katalysatorpellet nach einem der vorhergehenden Punkte, wobei das (Erd)alkalimetalloxid der Komponente (i) ein spezifisches Porenvolumen von 0,2-1,2 ml/g, bevorzugt 0,2-0,6 ml/g, stärker bevorzugt, 0,2-0,45 ml/g, gemessen nach DIN 66134, aufweist.

5. Katalysatorpellet nach einem der vorhergehenden Punkte, wobei das (Erd)alkalimetalloxid der Komponente (i) eine massenspezifische Oberfläche von 35-400 $m^2$/g, bevorzugt 75-375 $m^2$/g, stärker bevorzugt 125-350 $m^2$/g, gemessen nach DIN ISO 9277, aufweist.

6. Katalysatorpellet nach einem der vorhergehenden Punkte, wobei der Gewichtsanteil der Komponente (i) bezogen auf das Gesamtgewicht des Katalysatorpellets 0,1-100 Gew.-%, bevorzugt 1-100 Gew.-%, stärker bevorzugt 10-100 Gew.-%, noch stärker bevorzugt 20-99,9 Gew.-% und am stärksten bevorzugt 50-99,9 Gew.-% ausmacht.

7. Katalysatorpellet nach Punkt 2, wobei das (Erd)alkalimetalloxid Magnesiumoxid in einem Röntgendiffraktogramm (Cu-$K_\alpha$: 0,154056 nm) die fünf stärksten Signale bei 2θ = 37°, 43°, 62°, 75° und 78° aufweist, und das (Erd)alkalimetalloxid Calciumoxid in einem Röntgendiffraktogramm (Cu-$K_\alpha$: 0,154056 nm) die sechs stärksten Signale bei 2θ

= 32°, 37°, 53°, 64°, 67° und 79° aufweist.

8. Katalysatorpellet nach einem der vorhergehenden Punkte, wobei das (Erd)alkalimetalloxid der Komponente (i) erhältlich ist durch Kalzinieren des jeweiligen (Erd)alkalihydroxids, (Erd)alkalicarbonats, (Erd)alkalinitrats, (Erd)alkalisulfats, (Erd)alkaliacetats, (Erd)alkalioxalats, (Erd)alkaliphosphats, insbesondere des jeweiligen (Erd)alkalihydroxids.

9. Katalysatorpellet nach Punkt 8, wobei das Kalzinieren bei 300-900 °C, bevorzugt bei 350-650 °C, stärker bevorzugt bei 375-550 °C erfolgt und bevorzugt über 10-240 min, stärker bevorzugt über 60-210 min, noch stärker bevorzugt über 90-150 min andauert.

10. Katalysatorpellet nach Punkt 8 oder 9, wobei die Kalzinierung unter Luft-, Sauerstoff- oder Inertgasatmosphäre erfolgt.

11. Katalysatorpellet nach einem der vorhergehenden Punkte, wobei das Bindemittel der Komponente (ii) ausgewählt ist aus organischen oder anorganischen Bindemitteln, bevorzugt aus Schichtsilikat, wie z.B. Bentonit, Natriumsilikat, Natriumaluminat, Alumosilikat, Kieselsäure und dessen Ester, und Sole oder kolloidale Lösungen von Siliciumdioxid und in einer bevorzugten Ausführungsform katalytisch inert ist.

12. Katalysatorpellet nach einem der vorhergehenden Punkte, wobei das Trägermaterial der Komponente (ii) ausgewählt ist aus Aluminiumoxid, Zirkoniumoxid, Siliciumdioxid, Titanoxid, Titandioxid, Metallphosphat wie Hydroxylapatit, Ceroxid und Kohlenstoff sowie Mischoxiden wie z.B. $SiO_2$-$Al_2O_3$, $SiO_2$-$TiO_2$, $ZrO_2$-$SiO_2$, $ZrO_2$-$Al_2O_3$ oder Gemische von zwei oder mehreren dieser Materialien.

13. Katalysatorpellet nach einem der vorhergehenden Punkte, wobei das Bindemittel der Komponente (ii) 0-40 Gew.-%, bevorzugt 0-20 Gew.-%, weiter bevorzugt 0,1-15 Gew.-% und stärker bevorzugt 2-10 Gew.-% bezogen auf das Gesamtgewicht des Katalysatorpellets ausmacht.

14. Katalysatorpellet nach einem der vorhergehenden Punkte, wobei das Trägermaterial der Komponente (ii) 0-99,9 Gew.-%, stärker bevorzugt 0-80 Gew.-% und weiter bevorzugt 0-50 Gew.-% bezogen auf das Gesamtgewicht des Katalysatorpellets ausmacht.

15. Katalysatorpellet nach einem der vorhergehenden Punkte ferner umfassend
(iii) mindestens ein Oxid eines Elements der 3.-12. Hauptgruppe oder der Lanthanoide, bevorzugt mit einem Gewichtsanteil von 1-50 Gew.-%, stärker bevorzugt 5-30 Gew.-% und am stärksten bevorzugt 5-25 Gew.-% bezogen auf das (Erd)alkalimetalloxid der Komponente (i).

16. Katalysatorpellet nach einem der vorhergehenden Punkte, wobei der Wassergehalt bei 0,01-0,5 Gew.-% bezogen auf das Gesamtgewicht des Katalysatorpellets liegt.

17. Verfahren zur Herstellung eines Katalysatorpellets gemäß einem der Punkte 1-16, umfassend die Schritte

a) Bereitstellen eines (Erd)alkalihydroxids, eines (Erd)alkalicarbonats, eines (Erd)alkalinitrats, eines (Erd)alkalisulfats, eines (Erd)alkaliacetats, eines (Erd)alkalioxalats, eines (Erd)alkaliphosphats oder einer Mischung davon und ggf. mindestens eines Hydroxids, Carbonats, Nitrats, Acetats, Oxalats, Phosphats oder Sulfats eines Elements der 3.-12. Hauptgruppe oder der Lanthanoide als Ausgangsmaterial,
b)

b1) ggf. Aufbringen des Ausgangsmaterials auf ein Trägermaterial, oder
b2) ggf. Mischen des Ausgangsmaterials mit mindestens einem Bindemittel,

c) Bereitstellen des Ausgangsmaterials oder der nach Schritt b1) oder b2) erhaltenen Mischung als Pellet-Precursor,
d) ggf. Trocknung des nach Schritt c) erhaltenen Pellet-Precursors und
e) Kalzinieren des nach Schritt c) oder d) erhaltenen Pellet-Precursors, um das Katalysatorpellet herzustellen.

18. Verfahren nach Punkt 17, wobei der Pellet-Precursor

1-100 Gew.-% Ausgangsmaterial,
0-20 Gew.-% Bindemittel oder
0-99 Gew.-% Trägermaterial,

bezogen auf das Gesamtgewicht des Pellet-Precursors, umfasst.

19. Verfahren nach Punkt 17 oder 18, wobei der Anteil an Lösungsmittel nach Schritt b) bei 0-99 Gew.-%, bevorzugt 10-90 Gew.-% bezogen auf das Gesamtgewicht der Mischung liegt.

20. Verfahren nach einem der Punkte 17-19, wobei Schritt (c) mittels Granulieren, Pressen, Extrudieren, 3D-Drucken, Tablettieren und Sprühtrocknung der nach b) erhaltenen Mischung erfolgt.

21. Verfahren nach einem der Punkte 17-20, wobei der Lösungsmittelanteil nach Schritt c) oder d) bei 0-10 Gew.-% bezogen auf das Gesamtgewicht des Pellet-Precursors liegt.

22. Verfahren nach einem der Punkte 17-21, wobei das Kalzinieren im Schritt e) bei 300-900 °C, bevorzugt bei 350-650 °C, stärker bevorzugt bei 375-550 °C erfolgt und bevorzugt über 10-240 min, stärker bevorzugt über 60-210 min, noch stärker bevorzugt über 90-150 min andauert.

23. Verfahren nach einem der Punkte 17-22, wobei Schritt e) unter Luft-, Sauerstoff- oder Inertgasatmosphäre erfolgt.

24. Katalysatorpellet erhältlich durch ein Verfahren gemäß einem der Punkte 17-23.

25. Verwendung eines Katalysatorpellets gemäß einem der Punkte 1-16 oder 24 zur anionischen Polymerisation von Organosiloxanen und/oder zur Äquilibrierung von Organopolysiloxanen.

26. Verfahren zur anionischen Polymerisation von Organosiloxanen und/oder zur Äquilibrierung von Organopolysiloxanen durch Umsetzen von

(A) Organocyclosiloxanen der allgemeinen Formel (I)

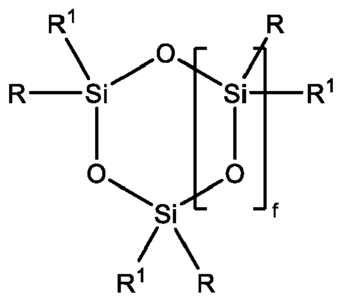

(I),

und/oder linearen Block-Organopolysiloxanen der allgemeinen Formel (II)

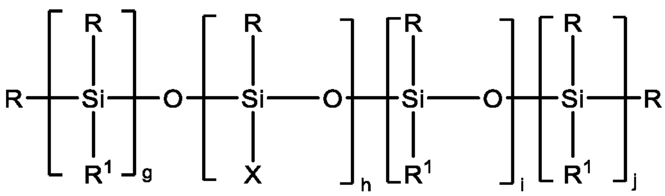

(II),

sowie linearen, statistischen oder alternierenden Organopolysiloxanen mit der Summenformel der allgemeinen Formel (II),

und gegebenenfalls einer Verbindung der allgemeinen Formel (III)

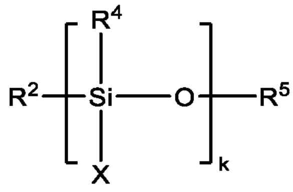

(III),

mit

(B) einem Initiator der allgemeinen Formel (IV)

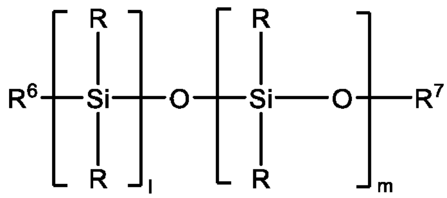

(IV),

wobei

R unabhängig voneinander ein einwertiger, gegebenenfalls substituierter $C_1$-$C_{30}$-Kohlenwasserstoffrest ist,

$R^1$ unabhängig voneinander ein einwertiger, gegebenenfalls substituierter $C_1$-$C_{30}$-Kohlenwasserstoffrest oder ein Polyetherrest ist,

f eine ganze Zahl von 1 bis 10 ist, vorzugsweise eine ganze Zahl von 1 bis 4, insbesondere 2, ist,

g 0 oder 1 ist,

h 0 oder eine ganze Zahl von 1 bis 1000, bevorzugt von 5 bis 800, ist,

i 0 oder eine ganze Zahl von 1 bis 1000, bevorzugt von 5 bis 800, ist,

j 0 oder 1 ist,

mit der Maßgabe, dass mindestens eines g, h, i, oder j $\neq$ 0 ist.

$R^2$ eine Hydroxygruppe oder -$OR^3$ ist,

$R^3$ ein einwertiger $C_1$-$C_{30}$-Kohlenwasserstoffrest,

$R^4$ für k = 1 ein einwertiger $C_1$-$C_{30}$-Kohlenwasserstoffrest oder $R^1$ ist und für k $\neq$ 1 unabhängig voneinander ein einwertiger $C_1$-$C_{30}$-Kohlenwasserstoffrest ist,

$R^5$ ein Wasserstoff oder ein einwertiger $C_1$-$C_{30}$-Kohlenwasserstoffrest ist,

X unabhängig voneinander ein einwertiger $C_1$-$C_{30}$-Kohlenwasserstoffrest oder ein funktionalisierter Rest ist,

k eine ganze Zahl von 1 bis 500, bevorzugt von 1 bis 400, weiter bevorzugt von 1 bis 300, ist,

$R^6$ R oder Wasserstoff ist,

$R^7$ R oder Wasserstoff ist,

l 0 oder 1 ist,
mit der Maßgabe, dass wenn l = 0 ist, $R^6$ und/oder $R^7$ ein Wasserstoff sein muss und wenn l ≠ 0 ist, $R^7$ ein Wasserstoffatom und $R^6$ R sein müssen, und

m 0 oder eine ganze Zahl von 1 bis 100, insbesondere von 5 bis 80, ist,

(C) in Gegenwart mindestens eines Katalysatorpellets nach einem der Punkte 1-16 oder 24,

(D) gegebenenfalls in Gegenwart eines Lösungsmittels, und

(E) gegebenenfalls in Gegenwart eines Phasentransferkatalysators.

27. Verfahren nach Punkt 26, wobei das Verfahren kontinuierlich durchgeführt wird.

28. Verfahren nach einem der Punkte 26-27, wobei der Katalysator (C) in einem anderen Aggregatszustand vorliegt als die Komponenten (A), (B), und (D).

29. Verfahren nach einem der Punkte 26-28, wobei der Katalysator (C) immobilisiert vorliegt.

30. Verfahren nach einem der Punkte 26-29, wobei der Polyetherrest ausgewählt ist aus einem Block-Polyether der allgemeinen Formel (V):

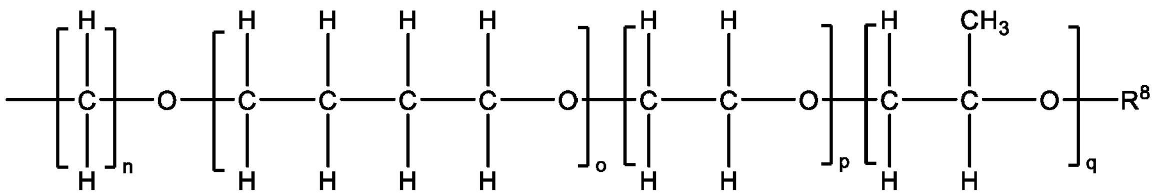

(V),

wobei

$R^8$ ein einwertiger, ggf. substituierter, $C_1$-$C_{30}$ Kohlenwasserstoffrest ist,

n 0 oder eine ganze Zahl von 2-30 ist,

o 0 oder eine ganze Zahl zwischen 1-50 ist,

p 0 oder eine ganze Zahl von 1-50 ist, und

q 0 oder eine ganze Zahl von 1-50 ist,

sowie einem statistischen oder alternierenden Polyether mit der Summenformel der allgemeinen Formel (V).

31. Verfahren nach einem der Punkte 26-30, wobei ein funktionalisierter Rest X ausgewählt ist aus der allgemeinen Formel (VI):

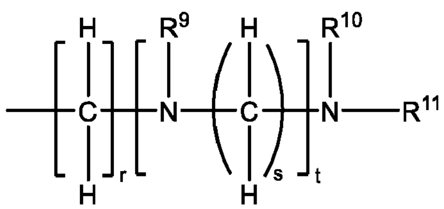

(VI),

wobei

$R^9$ R, ein Wasserstoff oder ein Acylrest, vorzugsweise ein Wasserstoff, ist,
$R^{10}$ R oder ein Wasserstoff, vorzugsweise Wasserstoff, ist,
$R^{11}$ R, ein Wasserstoff oder ein Acylrest, vorzugsweise Wasserstoff, ist.
r eine ganze Zahl von 2-3 ist
s eine ganze Zahl von 1-3 ist
t 0 oder eine ganze Zahl von 1 bis 4 ist, vorzugsweise 0 bis 1.

32. Verfahren nach einem der Punkte 26-31, wobei das Organocyclosiloxan der allgemeinen Formel (I) Octamethylcyclotetrasiloxan ist.

33. Verfahren nach einem der Punkte 26-32, wobei das Organopolysiloxan der allgemeinen Formel (II) bevorzugt Polydimethylsiloxan, z.B. Hexamethyldisiloxan, ist.

34. Verfahren nach einem der Punkte 26-33, wobei eine Verbindung der allgemeinen Formel (III) (3-Aminopropyl)dimethoxymethylsilan, (3-Aminopropyl)-trimethoxymethylsilan, [N-(2-Aminoethyl)-3-Aminopropyl)dimethoxymethylsilan, [N-(2-Aminoethyl)-3-Aminopropyl)trimethoxymethylsilan ist.

35. Verfahren nach einem der Punkte 26-34, wobei der Initiator der allgemeinen Formel (IV) Butanol oder Trimethylsilanol ist.

36. Verfahren nach einem der Punkte 26-35, wobei das molare Verhältnis des Initiators der allgemeinen Formel (IV) zu Verbindungen der Formel (I) und/oder (II) zwischen 0,003-1:1 liegt.

37. Verfahren nach einem der Punkte 26-36, wobei das Lösungsmittel (D) ein unpolares organisches Lösungsmittel ist, bevorzugt Xylol, Toluol, Cyclohexan, Heptan, Octan, Nonan oder Mischungen davon.

38. Verfahren nach einem der Punkte 26-37, wobei der Phasentransferkatalysator (E) Benzyltriethylammoniumchlorid, Kronenether, Polyethylenglycoldiethylether oder tertiäre Amine, wie 4-Dimethylaminopyridin oder N,N-Dimethylcyclohexylamin ist.

39. Verfahren nach einem der Punkte 26-38, wobei die Umsetzung in einem Rohrreaktor, Festbettreaktor oder Kreislaufreaktor erfolgt.

40. Verfahren nach einem der Punkte 26-39, wobei die Umsetzung in einem Temperaturbereich von 60-200 °C, bevorzugt 80-180 °C erfolgt.

41. Verfahren nach einem der Punkte 26-40, wobei die Reaktion mit einer weight hourly space velocity im Bereich von 1-30 $h^{-1}$, bevorzugt 3-30 $h^{-1}$, stärker bevorzugt 3-24 $h^{-1}$ durchgeführt wird.

42. Organopolysiloxan erhältlich durch ein Verfahren nach einem der Punkte 26-41.

## Patentansprüche

**1.** Katalysatorpellet zur anionischen Polymerisation von Organosiloxanen und/oder zur Äquilibrierung von Organopolysiloxanen umfassend

(i) mindestens ein (Erd)alkalimetalloxid, insbesondere ausgewählt aus Natriumoxid, Kaliumoxid, Rubidiumoxid, Cäsiumoxid, Berylliumoxid, Magnesiumoxid, Calciumoxid, Strontiumoxid oder Bariumoxid, und
(ii) ggf. mindestens ein Bindemittel, insbesondere ausgewählt aus Schichtsilikat, wie z.B. Bentonit, Natriumsilikat, Natriumaluminat, Alumosilikat, Kieselsäure und dessen Ester oder mindestens ein Trägermaterial, insbesondere ausgewählt aus Aluminiumoxid, Zirkoniumoxid, Siliciumdioxid, Titanoxid, Titandioxid, Metallphosphat wie Hydroxylapatit, Ceroxid, Kohlenstoff sowie Mischoxiden wie z.B. $SiO_2$-$Al_2O_3$, $SiO_2$-$TiO_2$, $ZrO_2$-$SiO_2$, $ZrO_2$-$Al_2O_3$ oder Gemische von zwei oder mehreren dieser Materialien,

**dadurch gekennzeichnet, dass** die $CO_2$-Desorptionsenthalpie des Katalysatorpellets 25-350 kJ/mol, bevorzugt 50-300 kJ/mol beträgt, gemessen mittels temperaturprogrammierter Desorption von $CO_2$.

2. Katalysatorpellet nach Anspruch 1, wobei das (Erd)alkalimetalloxid (i) einen mittleren Porenradius von 2-130 nm, bevorzugt 2-65 nm, gemessen nach DIN66134, und/oder ein spezifisches Porenvolumen von 0,2-1,2 ml/g, bevorzugt 0,2-0,6 ml/g, stärker bevorzugt, 0,2-0,45 ml/g, gemessen nach DIN66134, und/oder eine massenspezifische Oberfläche von 35-400 $m^2/g$, bevorzugt 75-375 $m^2/g$, gemessen nach DIN ISO 9277 aufweist.

3. Katalysatorpellet nach einem der vorhergehenden Ansprüche, wobei das (Erd)alkalimetalloxid der Komponente (i) erhältlich ist durch Kalzinieren des jeweiligen (Erd)alkalihydroxids, (Erd)alkalicarbonats, (Erd)alkalinitrats, (Erd)alkalisulfats, (Erd)alkaliacetats, (Erd)alkalioxalats, (Erd)alkaliphosphats, insbesondere des jeweiligen (Erd)alkalihydroxids, wobei das Kalzinieren bevorzugt bei 300-900 °C, stärker bevorzugt bei 350-650 °C erfolgt und bevorzugt über 10-240 min, stärker bevorzugt über 60-210 min, noch stärker bevorzugt über 90-150 min andauert, und wobei die Kalzinierung bevorzugt unter Luft-, Sauerstoff- oder Inertgasatmosphäre erfolgt.

4. Katalysatorpellet nach einem der vorhergehenden Ansprüche ferner umfassend (iii) mindestens ein Oxid eines Elements der 3.-12. Hauptgruppe oder der Lanthanoide, bevorzugt mit einem Gewichtsanteil von 1-50 Gew.-%, stärker bevorzugt 5-30 Gew.-% und am stärksten bevorzugt 5-25 Gew.-% bezogen auf das (Erd)alkalimetalloxid der Komponente (i).

5. Verfahren zur Herstellung eines Katalysatorpellets gemäß einem der Ansprüche 1-4, umfassend die Schritte

   a) Bereitstellen eines (Erd)alkalihydroxids, eines (Erd)alkalicarbonats, eines (Erd)alkalinitrats, eines (Erd)alkalisulfats, eines (Erd)alkaliacetats, eines (Erd)alkalioxalats, eines (Erd)alkaliphosphats oder einer Mischung davon und ggf. mindestens eines Hydroxids, Carbonats, Nitrats, Sulfats, Acetats, Oxalats oder Phosphats eines Elements der 3.-12. Hauptgruppe oder der Lanthanoide als Ausgangsmaterial,
   b)

      b1) ggf. Aufbringen des Ausgangsmaterials auf ein Trägermaterial, oder
      b2) ggf. Mischen des Ausgangsmaterials mit mindestens einem Bindemittel,

   c) Bereitstellen des Ausgangsmaterials oder der nach Schritt b1) oder b2) erhaltenen Mischung als Pellet-Precursor, z.B. mittels Extrusion oder 3D-Druck,
   d) ggf. Trocknung des nach Schritt c) erhaltenen Pellet-Precursors und
   e) Kalzinieren des nach Schritt c) oder d) erhaltenen Pellet-Precursors, um das Katalysatorpellet herzustellen, wobei das Kalzinieren z.B. unter Luft-, Sauerstoff- oder Inertgasatmosphäre, bevorzugt bei 300-900°C, stärker bevorzugt bei 350-650°C erfolgt, und bevorzugt über 10-240 min, stärker bevorzugt über 60-210 min, andauert.

6. Katalysatorpellet erhältlich durch ein Verfahren gemäß Anspruch 5.

7. Verwendung eines Katalysatorpellets gemäß einem der Ansprüche 1-4 oder 6 zur anionischen Polymerisation, insbesondere zur Polymerisation von zyklischen und linearen Organosiloxanen, und/oder zur Äquilibrierung von Organopolysiloxanen.

8. Verfahren zur anionischen Polymerisation von Organosiloxanen und/oder zur Äquilibrierung von Organopolysiloxanen durch Umsetzen von

   (A) Organocyclosiloxanen der allgemeinen Formel (I)

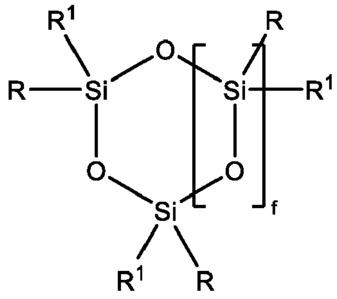

(I),

insbesondere Octamethylcyclotetrasiloxan,

und/oder linearen Block-Organopolysiloxanen der allgemeinen Formel (II),

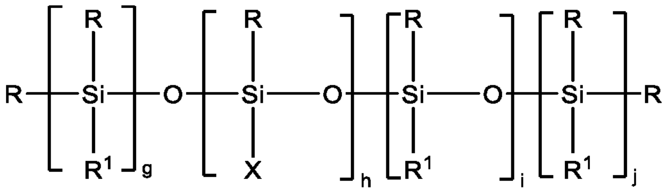

(II),

sowie linearen, statistischen oder alternierenden Organopolysiloxanen mit der Summenformel der allgemeinen Formel (II), insbesondere Hexamethyldisiloxan,
und gegebenenfalls einer Verbindung der allgemeinen Formel (III)

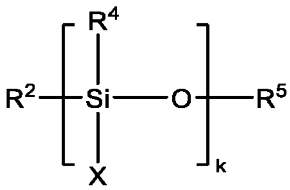

(III),

insbesondere (3-Aminopropyl)dimethoxymethylsilan, (3-Aminopropyl)trimethoxymethylsilan, [N-(2-Aminoethyl)-3-Aminopropyl)dimethoxymethylsilan, [N-(2-Aminoethyl)-3-Aminopropyl)trimethoxymethylsilan,

mit
(B) einem Initiator der allgemeinen Formel (IV)

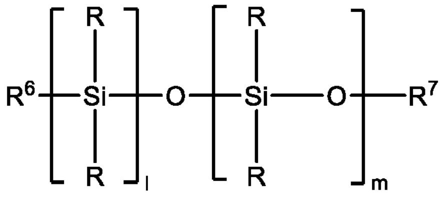

(IV),

insbesondere Butanol oder Trimethylsilanol,
wobei

R unabhängig voneinander ein einwertiger, gegebenenfalls substituierter $C_1$-$C_{30}$-Kohlenwasserstoffrest ist,
$R^1$ unabhängig voneinander ein einwertiger, gegebenenfalls substituierter $C_1$-$C_{30}$-Kohlenwasserstoffrest oder ein Polyetherrest ist,

f eine ganze Zahl von 1 bis 10 ist, vorzugsweise eine ganze Zahl von 1 bis 4, insbesondere 2 ist,
g 0 oder 1 ist,
h 0 oder eine ganze Zahl von 1 bis 1000, bevorzugt von 5-800 ist,
i 0 oder eine ganze Zahl von 1 bis 1000 ist, bevorzugt von 5-800 ist,
j 0 oder 1 ist,

mit der Maßgabe, dass mindestens eines g, h, i, oder j $\neq$ 0 ist

$R^2$ eine Hydroxylgruppe oder $-OR^3$ ist,
$R^3$ ein einwertiger $C_1$-$C_{30}$-Kohlenwasserstoffrest,
$R^4$ für k = 1 ein einwertiger $C_1$-$C_{30}$-Kohlenwasserstoffrest oder $R^1$ ist und für k $\neq$ 1 unabhängig voneinander ein einwertiger $C_1$-$C_{30}$-Kohlenwasserstoffrest ist,
$R^5$ ein Wasserstoff oder ein einwertiger $C_1$-$C_{30}$-Kohienwasserstoffrest ist,
X unabhängig voneinander ein einwertiger $C_1$-$C_{30}$-Kohlenwasserstoffrest oder ein funktionalisierter Rest ist,
k eine ganze Zahl von 1 bis 500, bevorzugt 1 bis 400, weiter bevorzugt 1 bis 300 ist,
$R^6$ R oder Wasserstoff ist,
$R^7$ R oder Wasserstoff ist,
l 0 oder 1 ist,
mit der Maßgabe, dass wenn l = 0 ist, $R^6$ und/oder $R^7$ ein Wasserstoff sein muss und wenn l $\neq$ 0 ist, $R^7$ ein Wasserstoffatom und $R^6$ R sein müssen, und
m 0 oder eine ganze Zahl von 1 bis 100, insbesondere von 5 bis 80 ist,

(C) in Gegenwart mindestens eines Katalysatorpellets nach einem der Ansprüche 1-4 oder 6,
(D) gegebenenfalls in Gegenwart eines Lösungsmittels, bevorzugt Xylol, Toluol, Cyclohexan, Heptan, Octan, Nonan oder Mischungen davon, und
(E) gegebenenfalls in Gegenwart eines Phasentransferkatalysators, insbesondere Benzyltriethylammoniumchlorid, Kronenether, Polyethylenglycoldiethylether oder tertiärer Amine, wie 4-Dimethylaminopyridin oder N,N-Dimethylcyclohexylamin.

**9.** Verfahren nach Anspruch 8, wobei das Verfahren kontinuierlich durchgeführt wird.

**10.** Verfahren nach einem der Ansprüche 8-9, wobei der Katalysator (C) immobilisiert vorliegt.

**11.** Verfahren nach einem der Ansprüche 8-10, wobei der Polyetherrest ausgewählt ist aus einem Block-Polyether der allgemeinen Formel (V):

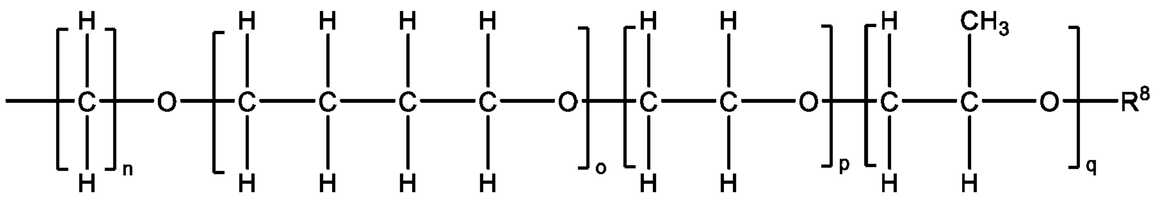

(V),

wobei

$R^8$ ein einwertiger, ggf. substituierter, $C_1$-$C_{30}$ Kohlenwasserstoffrest ist,
n 0 oder eine ganze Zahl von 2-30 ist,
o 0 oder eine ganze Zahl zwischen 1-50 ist,
p 0 oder eine ganze Zahl von 1-50 ist, und
q 0 oder eine ganze Zahl von 1-50 ist,

sowie einem statistischen oder alternierenden Polyether mit der Summenformel der allgemeinen Formel (V).

**12.** Verfahren nach einem der Ansprüche 8-11, wobei ein funktionalisierter Rest X ausgewählt ist aus der allgemeinen Formel (VI):

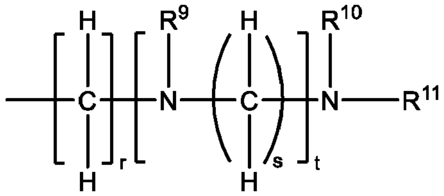

(VI),

wobei

$R^9$ R, ein Wasserstoff oder ein Acylrest; vorzugsweise ein Wasserstoff, ist,
$R^{10}$ R oder ein Wasserstoff, vorzugsweise Wasserstoff, ist,
$R^{11}$ R, ein Wasserstoff oder ein Acylrest, vorzugsweise Wasserstoff, ist.
r eine ganze Zahl von 2-3 ist
s eine ganze Zahl von 1-3 ist
t 0 oder eine ganze Zahl von 1 bis 4 ist, vorzugsweise 0 bis 1.

**13.** Verfahren nach einem der Ansprüche 8-12, wobei das molare Verhältnis des Initiators der allgemeinen Formel (IV) zu Verbindungen der Formel (I) und/oder (II) zwischen 0,003-1:1 liegt.

**14.** Verfahren nach einem der Ansprüche 8-13, wobei die Umsetzung in einem Rohrreaktor, Festbettreaktor oder Kreislaufreaktor, bevorzugt in einem Temperaturbereich von 60-200 °C, und bevorzugt mit einer weight hourly space velocity im Bereich von 1-30 $h^{-1}$ erfolgt.

**15.** Organopolysiloxan erhältlich durch ein Verfahren nach einem der Ansprüche 8-14.

Abbildung 0: Effekt der Kalzinierung auf die katalytische Aktivität

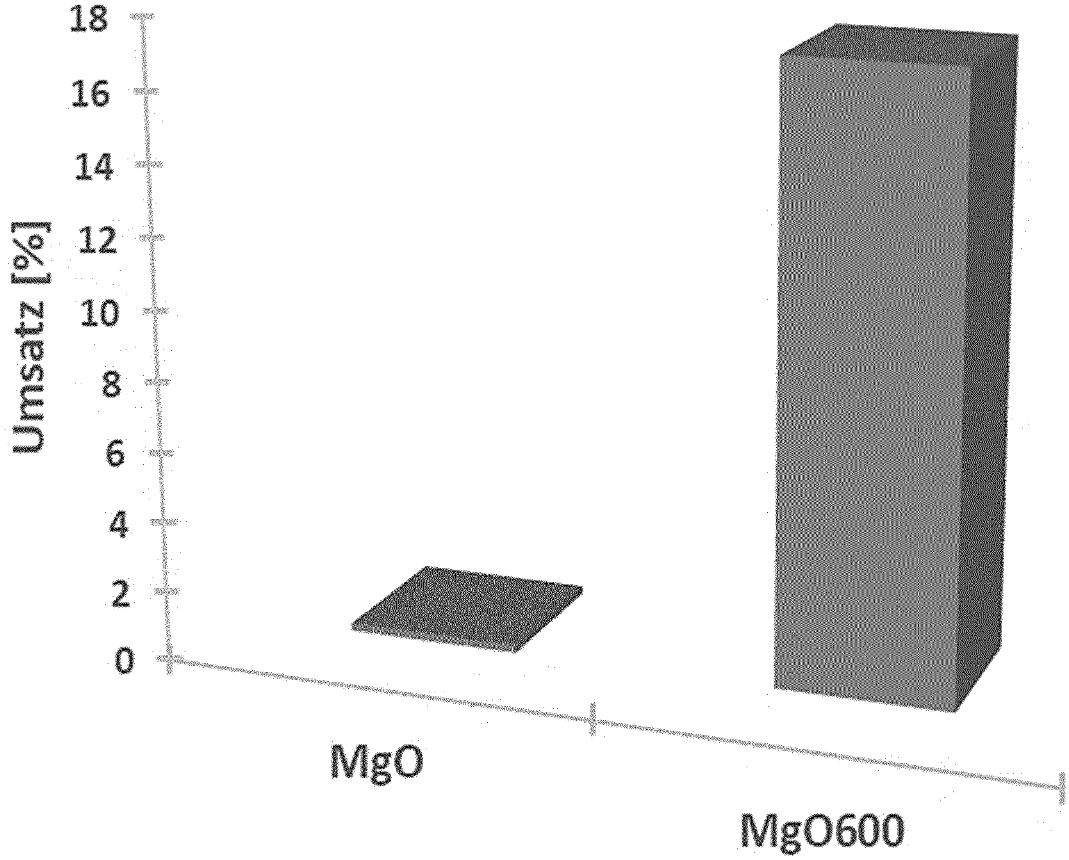

**Abbildung 1: Porengrößenverteilung in Abhängigkeit der Kalzinierungstemperatur**

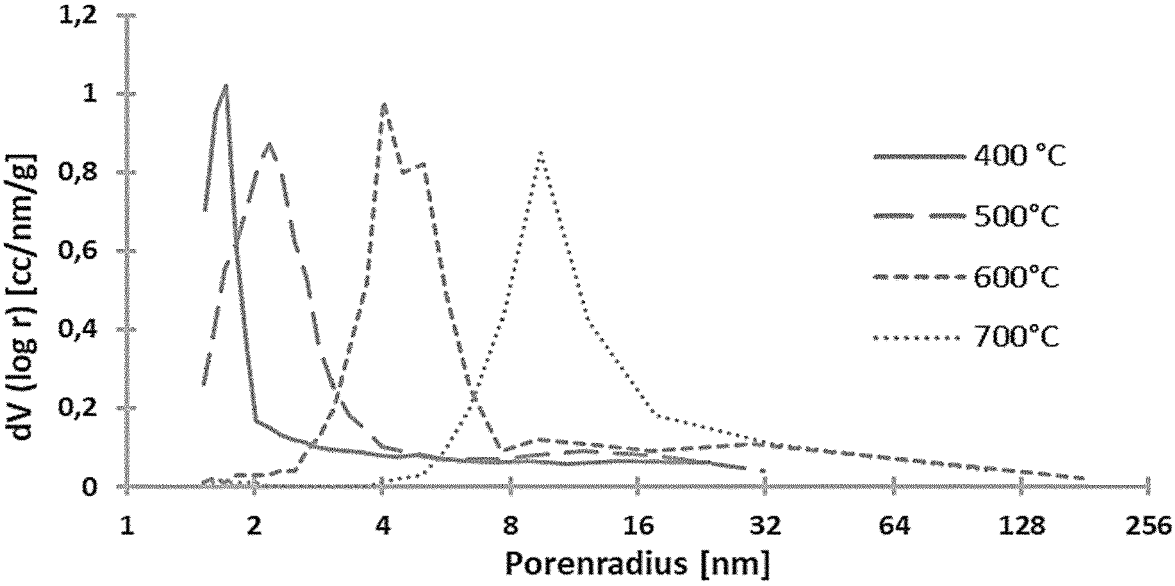


**Abbildung 2: Porenvolumen in Abhängigkeit der Kalzinierungstemperatur**

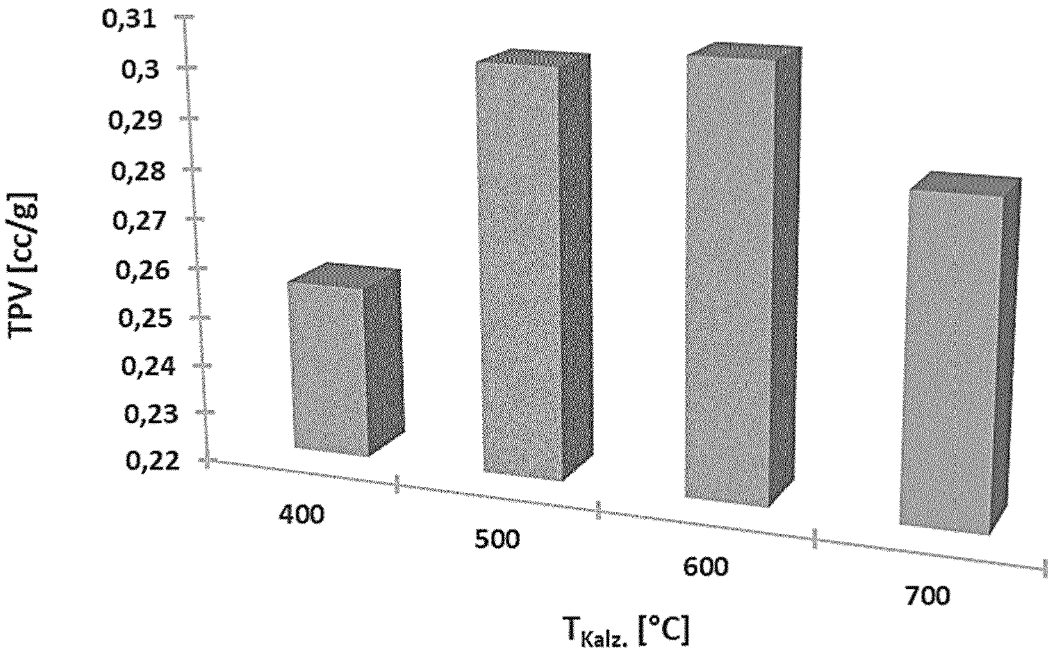

**Abbildung 3: Massenspezifische Oberfläche in Abhängigkeit der Kalzinierungstemperatur**

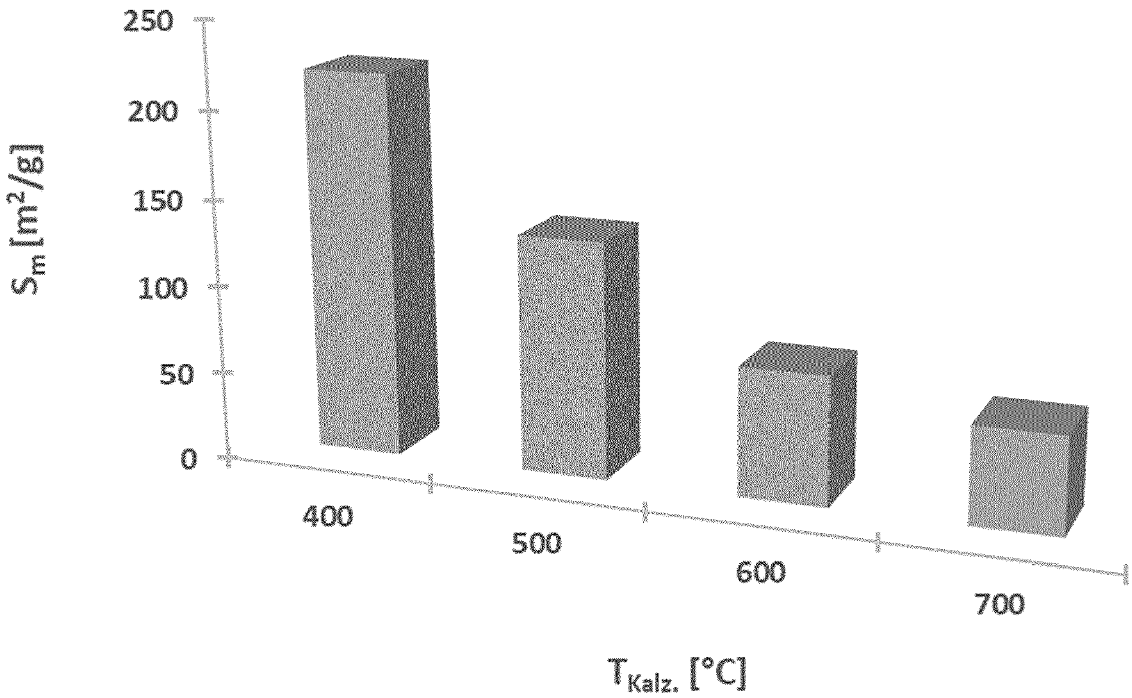

Abbildung 4: Effekt der Kalzinierungsdauer auf die Umsetzung von $Mg(OH)_2$ bei einer Temperatur von 400 °C

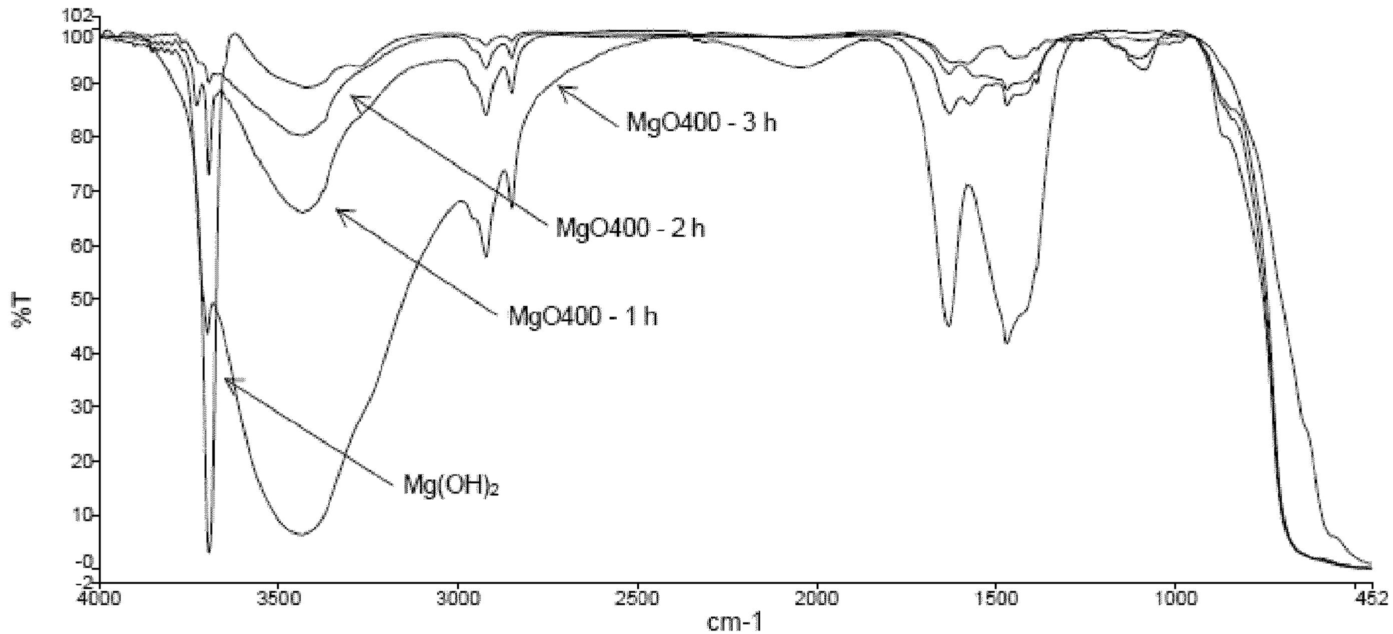

**Abbildung 5: Umsatz abhängig von der Kalzinierungstemperatur bei 3 h**

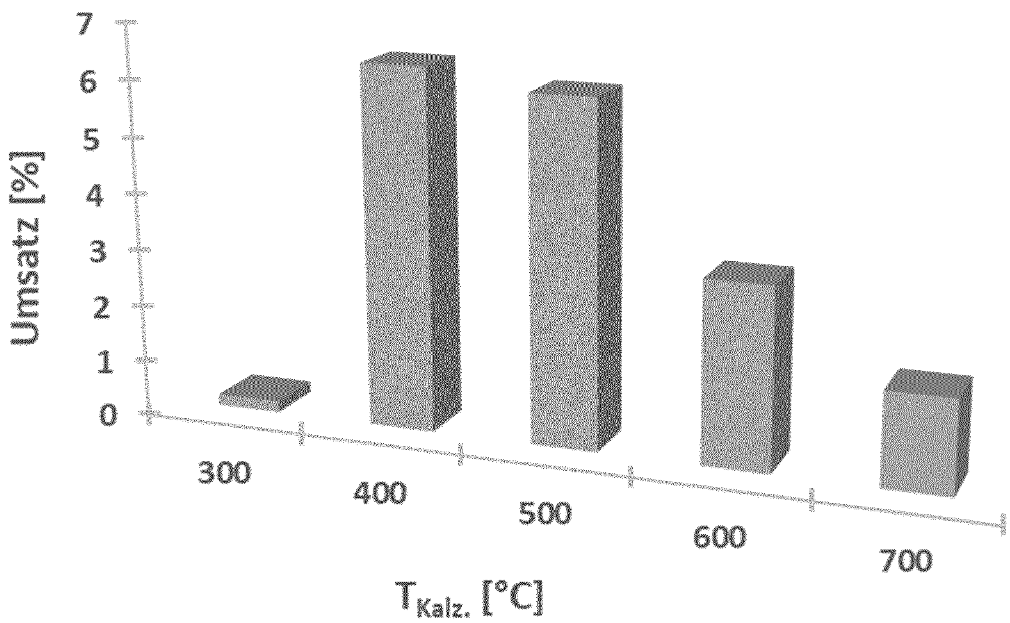

## Abbildung 6: Temperatur-programmierte-Desorption von $CO_2$: Basenstärke

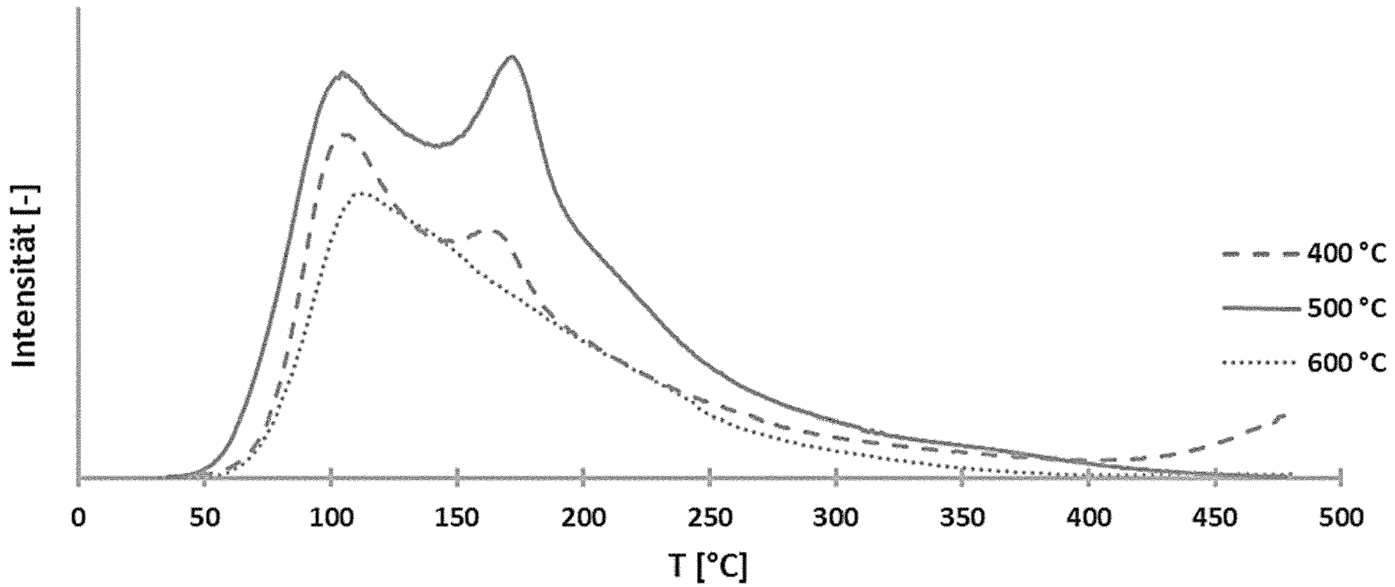


| Schritt | Experimentelles Vorgehen | T / °C | Temp.rampe / °C/min | Haltedauer / min | Gas | Volumenstrom / sccm |
|---|---|---|---|---|---|---|
| 1 | Ausheizen | 400-480 | 10 | 30 | He 6.0 | 50 |
| 2 | Abkühlen | 35 | - | - | He 6.0 | 50 |
| 3 | CO2-Adsorption | 35 | - | 30 | CO2 5.0 | 50 |
| 4 | Spülen | 35 | - | 60 | He 6.0 | 100 |
| 5 | Heizen | 480 | 10 | 70 | He 6.1 | 100 |
| 6 | Kalibrieren | 480 | - | 30 | 2.01% CO2 in He | 100 |
| 7 | Spülen | 480 | - | 60 | He 6.0 | 100 |
| 8 | Abkühlen | 35 | - | - | He 6.1 | 35 |

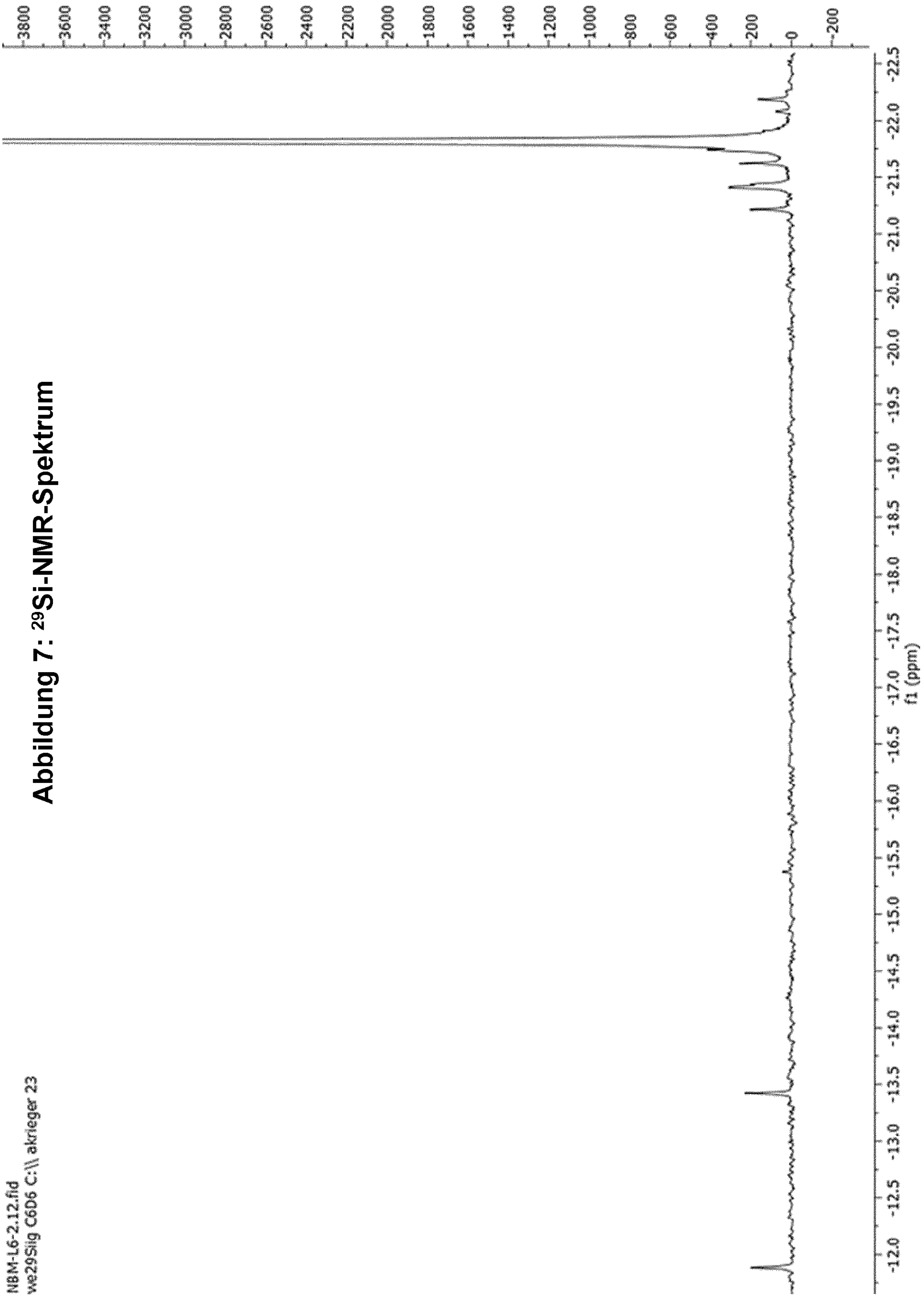


Abbildung 7: $^{29}$Si-NMR-Spektrum

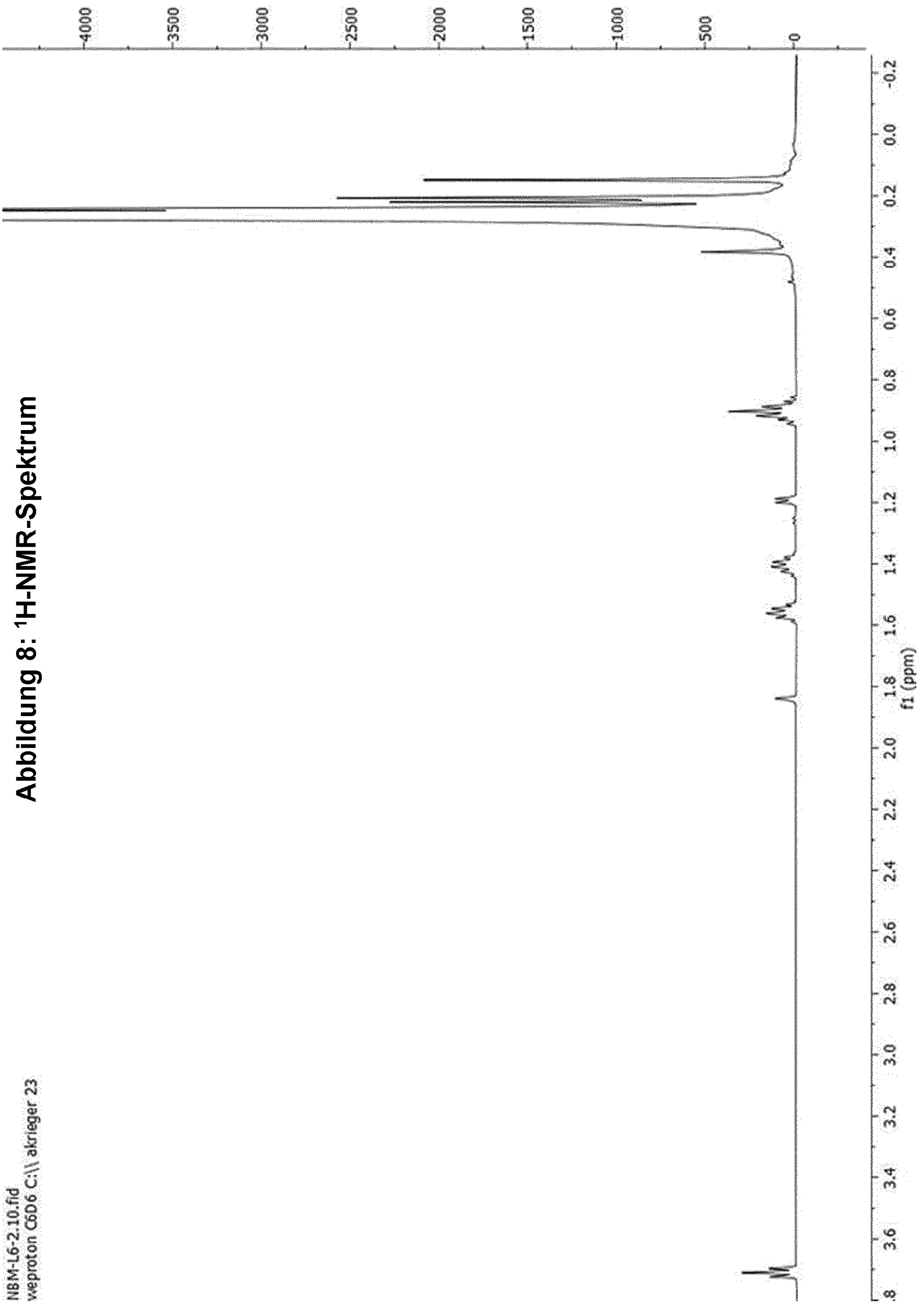


Abbildung 8: $^1$H-NMR-Spektrum

Europäisches Patentamt
European Patent Office
Office européen des brevets

# EUROPÄISCHER RECHERCHENBERICHT

Nummer der Anmeldung
EP 22 19 8742

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | CN 108 484 913 A (JIANGSU COSIL ADVANCED MAT CO LTD) 4. September 2018 (2018-09-04)<br>* Absatz [0006] - Absatz [0013] *<br>* Embodiment/Example 1 *<br>----- | 15<br>1-14 | INV.<br>C08G77/08<br>C08G77/10<br>B01J21/10<br>B01J23/02<br>B01J23/04 |
| X,D<br>A | WO 2006/122704 A1 (WACKER CHEMIE AG [DE]; SCHAEFER OLIVER [DE]; BACHMAIER SANDRA [AT]) 23. November 2006 (2006-11-23)<br>* Seite 2, Zeile 29 - Seite 9, Zeile 2 *<br>* Beispiele 1-6 *<br>----- | 15<br>1-14 | |

RECHERCHIERTE SACHGEBIETE (IPC)
C08G
B01J

Der vorliegende Recherchenbericht wurde für alle Patentansprüche erstellt

2

| Recherchenort | Abschlußdatum der Recherche | Prüfer |
|---|---|---|
| Den Haag | 21. März 2023 | Stinchcombe, John |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 19 8742

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2023

| Im Recherchenbericht angeführtes Patentdokument | Datum der Veröffentlichung | Mitglied(er) der Patentfamilie | Datum der Veröffentlichung |
|---|---|---|---|
| CN 108484913 A | 04-09-2018 | KEINE | |
| WO 2006122704 A1 | 23-11-2006 | DE 102005022856 A1 | 23-11-2006 |
| | | EP 1883666 A1 | 06-02-2008 |
| | | JP 4886772 B2 | 29-02-2012 |
| | | JP 2008540781 A | 20-11-2008 |
| | | US 2008167487 A1 | 10-07-2008 |
| | | WO 2006122704 A1 | 23-11-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3599256 B1
- WO 2006122704 A
- EP 1988115 A1
- EP 3374077 A


### In der Beschreibung aufgeführte Nicht-Patentliteratur


- **M LEON ; E. DIAZ ; A. VEGA ; S. ORDONEZ.** A kinetic study of $CO_2$ desorption from basic material: Correlation with adsorption properties. *Chemical Engineering Journal,* 2011, vol. 157, 341-348